# EUROPEAN PATENT APPLICATION

(11) **EP 4 694 371 A1**
(43) Date of publication of application: **11.02.2026**
(21) Application number: 24784168.7
(22) Date of filing: 28.03.2024
(51) Int. Cl.: H04W 52/02

(54) **COMMUNICATION METHOD AND APPARATUS**

(30) Priority: 07.04.2023 CN 202310388879; 10.05.2023 CN 202310523641
(71) Applicant: Huawei Technologies Co., Ltd., Shenzhen, Guangdong 518129 (CN)
(72) Inventor: LI, Jie, Shenzhen, Guangdong 518129 (CN); PENG, Wenjie, Shenzhen, Guangdong 518129 (CN); WANG, Rui, Shenzhen, Guangdong 518129 (CN); SHI, Yulong, Shenzhen, Guangdong 518129 (CN)
(74) Representative: Isarpatent
(86) International application number: PCT/CN2024/084489
(87) International publication number: WO 2024/208083

(57) **Abstract**

Embodiments of this application provide a communication method and apparatus. A first terminal determines first information, where the first information includes at least one parameter; and sends the first information to a second terminal. First cycle information is configured for the first terminal, the first cycle information indicates an eDRX cycle of the first terminal, the at least one parameter is used to determine second cycle information, the second cycle information is used to determine a cycle in which a network pages the first terminal, the at least one parameter is related to second information, and the second information includes at least one of the following: partial information or all information in the first cycle information, and a PTW of the first terminal. In the method, the first terminal determines, based on information related to an eDRX mechanism, the at least one parameter to be sent to the second terminal, so that a paging cycle determined by the second terminal based on the at least one parameter can adapt to the eDRX mechanism of the first terminal. This can improve reliability of a relay function, and reduce power consumption of the terminal.

## Description

### CROSS-REFERENCE TO RELATED APPLICATIONS

This application claims priority to Chinese Patent Application No. 202310388879.0, filed with the China National Intellectual Property Administration on April 7, 2023 and entitled "COMMUNICATION METHOD AND APPARATUS", and this application claims priority to Chinese Patent Application No. 202310523641.4, filed with the China National Intellectual Property Administration on May 10, 2023 and entitled "COMMUNICATION METHOD AND APPARATUS", both of which are incorporated herein by reference in their entireties.

### TECHNICAL FIELD

This application relates to the field of communication technologies, and in particular, to a communication method and apparatus.

### BACKGROUND

A paging (paging) mechanism means that when a network needs to send data to UE, the network sends a paging message to enable a terminal device in an idle (IDLE or idle) mode or an inactive (inactive) mode to enter a connected mode. When a discontinuous reception (discontinuous reception, DRX) mechanism is configured for the terminal device, a cycle (referred to as a "paging cycle" below) in which the network pages the terminal device may be determined based on a DRX cycle of the terminal device. To adapt to low power consumption of the Internet of things, an extended discontinuous reception (extended discontinuous reception, eDRX) mechanism is introduced based on the DRX mechanism. In an eDRX cycle, the terminal device is in a deep sleep period most of time, and monitors a paging message only in a paging time window (paging time window, PTW) based on the DRX mechanism.

In a relay (relay) scenario, a remote terminal sends information related to a paging cycle of the remote terminal to a relay terminal, so that the relay terminal can monitor a paging message in the paging cycle of the remote terminal, and forward the paging message obtained through monitoring to the remote terminal. This further implements paging of the remote terminal by a network.

However, when the remote terminal provides the information related to the paging cycle for the relay terminal, a relay function is unreliable, and power consumption of the device is high.

### SUMMARY

Embodiments of this application provide a communication method and apparatus, so that a relay terminal provides, for a remote terminal, a relay service that adapts to an eDRX mechanism. This further improves reliability of a relay function and reduces power consumption of the terminal.

According to a first aspect, a communication method is provided, and is applied to a first terminal or a chip in a first terminal. A second terminal provides a relay service for the first terminal. For example, the method is applied to the first terminal. The method includes: determining first information, where the first information includes at least one parameter; and sending the first information to the second terminal. First cycle information is configured for the first terminal, the first cycle information indicates an extended discontinuous reception (extended discontinuous reception, eDRX) cycle of the first terminal, the at least one parameter is used to determine second cycle information, the second cycle information is used to determine a cycle in which a network pages the first terminal, the at least one parameter is related to second information, and the second information includes at least one of the following: partial information or all information in the first cycle information, and a paging time window (paging time window, PTW) of the first terminal.

In embodiments of this application, the first terminal may determine, based on information (for example, an eDRX cycle and a PTW) related to an eDRX mechanism, the at least one parameter to be sent to the second terminal, so that a paging cycle determined by the second terminal based on the at least one parameter can adapt to the eDRX mechanism of the first terminal. This can improve reliability of a relay function, and reduce power consumption of the terminal.

In a possible design, the determining the first information includes: determining the first information based on at least one of threshold information, eDRX information, discontinuous reception (discontinuous reception, DRX) information, PTW information, and radio resource control (radio resource control, RRC) mode information. The threshold information indicates a first threshold, and the first threshold is a maximum value in a value range of an eDRX cycle. The eDRX cycle information indicates the eDRX cycle of the first terminal. The DRX information indicates a DRX cycle of the first terminal. The PTW information indicates the PTW of the first terminal. The RRC mode information indicates an RRC mode of the first terminal.

The following enumerates several specific implementations.

In a possible design, the determining the first information based on at least one of the threshold information, the eDRX information, the discontinuous reception DRX information, the PTW information, and the radio resource control RRC mode information includes: determining the at least one parameter in the first information based on the threshold information and the eDRX information.

For example, the at least one parameter is determined based on a value relationship between the first threshold and the eDRX cycle of the first terminal.

For example, if any eDRX cycle of the first terminal is less than or equal to the first threshold, the at least one parameter is determined based on the any eDRX cycle, where the second information includes the any eDRX cycle. If at least one eDRX cycle of the first terminal exceeds the first threshold, the at least one parameter is determined based on the DRX cycle of the first terminal and/or a default DRX cycle, where the second information includes the PTW of the first terminal, and further includes the DRX cycle of the first terminal or the default DRX cycle.

In other words, if an eDRX cycle that does not exceed the first threshold is configured for the first terminal, the eDRX cycle may be used to determine the at least one parameter. For example, if an eDRX cycle configured by an upper layer for the first terminal does not exceed the first threshold, the second information may include the eDRX cycle configured by the upper layer for the first terminal. If an eDRX cycle configured by an RRC layer for the first terminal does not exceed the first threshold, the second information may include the eDRX cycle configured by the RRC layer for the first terminal.

If an eDRX cycle that exceeds the first threshold is configured for the first terminal, the PTW may be used to determine the at least one parameter. For example, if the eDRX cycle configured by the upper layer for the first terminal exceeds the first threshold, the second information may include a PTW configured by the upper layer for the first terminal. If the eDRX cycle configured by the RRC layer for the first terminal exceeds the first threshold, the second information may include a PTW configured by the RRC layer for the first terminal.

In a possible design, the determining the first information based on at least one of the threshold information, the eDRX information, the discontinuous reception DRX information, the PTW information, and the radio resource control RRC mode information includes: determining the at least one parameter in the first information based on the eDRX information and the DRX information.

For example, the eDRX cycle of the first terminal includes the eDRX cycle configured by the upper layer and/or the eDRX cycle configured by the RRC layer for the first terminal, and the DRX cycle configured by the first terminal includes a DRX cycle configured by the upper layer and/or a DRX cycle configured by the RRC layer for the first terminal. The determining the at least one parameter in the first information based on the eDRX information and the DRX information includes: if the upper layer does not configure the eDRX cycle for the first terminal, determining the at least one parameter based on the DRX cycle configured by the upper layer for the first terminal and/or the default DRX cycle, where the second information includes the PTW configured by the upper layer for the first terminal, and further includes the DRX cycle configured by the upper layer for the first terminal and/or the default DRX cycle; and/or if the RRC layer does not configure the eDRX cycle for the first terminal, determining the at least one parameter based on the DRX cycle configured by the RRC layer for the first terminal and/or the default DRX cycle, where the second information includes a PTW configured by the RRC layer for the first terminal, and further includes the DRX cycle configured by the RRC layer for the first terminal and/or the default DRX cycle.

In other words, if an eDRX cycle that does not exceed the first threshold is configured for the first terminal, the eDRX cycle may be used to determine the at least one parameter. If an eDRX cycle that exceeds the first threshold is configured for the first terminal, the PTW, the DRX cycle, and/or the default DRX cycle may be used to determine the at least one parameter.

This can reduce power consumption of the terminal, and improve paging efficiency.

In a possible design, the determining the first information based on at least one of the threshold information, the eDRX information, the discontinuous reception DRX information, the PTW information, and the radio resource control RRC mode information includes: determining the at least one parameter in the first information based on the PTW information.

For example, the PTW of the first terminal includes the PTWs configured by the upper layer and the RRC layer for the first terminal. The determining the at least one parameter in the first information based on the PTW information includes: determining the at least one parameter based on a value relationship between the PTW configured by the upper layer for the first terminal and the PTW configured by the RRC layer for the first terminal; and/or determining the at least one parameter based on an overlapping mode between the PTW configured by the upper layer for the first terminal and the PTW configured by the RRC layer for the first terminal.

For example, the determining the at least one parameter based on the value relationship between the PTW configured by the upper layer for the first terminal and the PTW configured by the RRC layer for the first terminal includes: if the PTW configured by the upper layer for the first terminal is greater than the PTW configured by the RRC layer for the first terminal, determining the at least one parameter based on the DRX cycle configured by the upper layer for the first terminal and/or the default DRX cycle, where the second information includes the PTW configured by the upper layer for the first terminal, and further includes the DRX cycle configured by the upper layer for the first terminal and/or the default DRX cycle; or if the PTW configured by the upper layer for the first terminal is less than the PTW configured by the RRC layer for the first terminal, determining the at least one parameter based on the DRX cycle configured by the RRC layer for the first terminal and/or the default DRX cycle, where the second information includes the PTW configured by the RRC layer for the first terminal, and further includes the DRX cycle configured by the RRC layer for the first terminal and/or the default DRX cycle.

For example, the determining the at least one parameter based on the overlapping mode between the PTW configured by the upper layer for the first terminal and the PTW configured by the RRC layer for the first terminal includes: if the PTW configured by the upper layer for the first terminal does not overlap the PTW configured by the RRC layer for the first terminal, determining the at least one parameter based on the DRX cycles configured by the upper layer and the RRC layer for the first terminal and/or the default DRX cycle, where the second information includes the PTWs configured by the upper layer and the RRC layer for the first terminal, and further includes the DRX cycles configured by the upper layer and the RRC layer for the first terminal and/or the default DRX cycle; or if there is an overlapping part and a non-overlapping part between the PTW configured by the upper layer for the first terminal and the PTW configured by the RRC layer for the first terminal, for the overlapping part, determining the at least one parameter based on the DRX cycle configured by the upper layer for the first terminal, the DRX cycle configured by the RRC layer for the first terminal, and the default DRX cycle, where the second information includes the PTWs configured by the upper layer and the RRC layer for the first terminal, and further includes the DRX cycle configured by the upper layer for the first terminal, the DRX cycle configured by the RRC layer for the first terminal, and the default DRX cycle; and for the non-overlapping part, determining the at least one parameter based on the default DRX cycle and a DRX cycle in a larger PTW in the PTW configured by the upper layer for the first terminal and the PTW configured by the RRC layer for the first terminal, where the second information includes the larger PTW, the DRX cycle in the larger PTW, and the default DRX cycle.

In a possible design, the determining the first information based on at least one of the threshold information, the eDRX information, the discontinuous reception DRX information, the PTW information, and the radio resource control RRC mode information includes: if the RRC mode is an RRC idle mode, determining the at least one parameter based on the eDRX cycle configured by the upper layer for the first terminal; or if the RRC mode is an RRC inactive mode, determining the at least one parameter based on the eDRX cycle configured by the upper layer and/or the eDRX cycle configured by the RRC layer for the first terminal.

When the first terminal is in different RRC modes, network devices that initiate paging to the first terminal may be different. Therefore, the first terminal determines, based on the RRC mode, a parameter provided for the second terminal, to help improve reliability of determining a paging cycle by the second terminal.

In a possible design, that the at least one parameter is related to the second information includes: The at least one parameter includes partial information or all information in the second information; and/or the at least one parameter includes a statistical value of the partial information or all the information in the second information. Optionally, the statistical value of the partial information or all the information in the second information is a minimum value of the partial information or all the information in the second information.

Certainly, the foregoing is merely an example, and actual application is not limited thereto.

In a possible design, the sending the first information to the second terminal includes: when capability information of the second terminal and capability information of a serving cell of the second terminal meet a preset condition, sending the first information to the second terminal. The capability information of the second terminal indicates that the second terminal supports or does not support an eDRX mechanism, the capability information of the serving cell indicates that the serving cell supports or does not support the eDRX mechanism, and the preset condition includes that the second terminal supports the eDRX mechanism and the serving cell supports the eDRX mechanism.

In this design manner, the first terminal determines, based on the capability information of the second terminal and the capability information of the serving cell of the second terminal, whether to provide the information related to the eDRX mechanism of the first terminal for the second terminal, to reduce a waste of transmission resources, and further reduce power consumption of the terminal.

In a possible design, the method further includes: obtaining the capability information of the second terminal and/or the capability information of the serving cell of the second terminal from the second terminal. Certainly, actual application is not limited thereto.

In a possible design, that the serving cell supports the eDRX mechanism includes: When the RRC mode of the first terminal is the RRC idle mode and/or the RRC inactive mode, the serving cell supports the eDRX mechanism. The sending the first information to the second terminal includes: when the serving cell supports the eDRX mechanism, sending the first information.

In this design manner, whether the serving cell supports the eDRX mechanism when the second terminal is in different RRC modes is distinguished, to improve accuracy of the capability information of the serving cell, and further improve reliability of the relay service.

In a possible design, the method further includes: determining that the second terminal is capable of receiving, for the first terminal, a paging message sent by the network to the second terminal, and sending the first information to the second terminal.

This can reduce a waste of transmission resources and power consumption of the terminal, and further reduce implementation complexity on the first terminal side.

In a possible design, the method further includes: receiving sixth indication information from the second terminal. The sixth indication information indicates that the second terminal is capable of receiving, for the first terminal, the paging message sent by the network to the first terminal, or indicates the first terminal to send the at least one parameter. After receiving the sixth indication information, the first terminal sends the first information to the second terminal.

This can reduce a waste of transmission resources and power consumption of the terminal, and further reduce implementation complexity on the first terminal side.

According to a second aspect, a communication method is provided, and is applied to a first terminal or a chip in a first terminal. A second terminal provides a relay service for the first terminal, and the second terminal and/or a serving cell of the first terminal does not support an eDRX mechanism. For example, the method is applied to the first terminal. The method includes: determining first information based on eDRX information of the first terminal, where the first information includes at least one parameter; and sending the first information to the second terminal, where the at least one parameter is used to determine second cycle information, and the second cycle information is used to determine a cycle in which a network pages the first terminal.

In embodiments of this application, when the second terminal and/or the serving cell of the first terminal does not support the eDRX mechanism, the first terminal may set a value of a DRX cycle of the first terminal to a value that adapts to the eDRX mechanism, so that the relay service provided by the second terminal for the first terminal can adapt to the eDRX mechanism of the first terminal. This improves reliability of a relay function, and reduces power consumption of the terminal.

It may be understood that the second terminal and/or the serving cell of the first terminal not supporting the eDRX mechanism includes the following several cases: 1. The second terminal does not support the eDRX mechanism. 2. The serving cell of the first terminal does not support the eDRX mechanism. 3. The second terminal does not support the eDRX mechanism, and the serving cell of the first terminal does not support the eDRX mechanism.

In a possible design, a serving cell of the second terminal supports the eDRX mechanism.

In a possible design, that the serving cell of the second terminal supports the eDRX mechanism includes: When an RRC mode of the second terminal is an RRC idle mode and/or an RRC inactive mode, the serving cell of the second terminal supports the eDRX mechanism.

In a possible design, the eDRX information of the first terminal indicates the eDRX cycle of the first terminal. The determining the first information based on the eDRX information of the first terminal includes: determining the at least one parameter based on the eDRX information of the first terminal and reference information. The reference information includes at least one of the following: threshold information, a first value range, a second value range, and RRC mode information. The threshold information includes a first threshold and/or a second threshold. The first value range is a value range of an eDRX cycle. The second value range is a value range of a DRX cycle. The RRC mode information indicates an RRC mode of the first terminal.

The following enumerates several possible implementations.

In a possible design, the determining the at least one parameter based on the eDRX information of the first terminal and the reference information includes: determining the at least one parameter based on a value relationship between the eDRX cycle indicated by the eDRX information of the first terminal and the threshold indicated by the threshold information.

For example, the first threshold is a maximum value in the first value range, and the second threshold is a maximum value in the second value range. The determining the at least one parameter based on the value relationship between the eDRX cycle indicated by the eDRX information of the first terminal and the threshold indicated by the threshold information includes:
if the eDRX cycle of the first terminal is less than or equal to the second threshold, determining that the at least one parameter includes the eDRX cycle of the first terminal; or
if the eDRX cycle of the first terminal exceeds the second threshold and is less than or equal to the first threshold, determining the at least one parameter based on an intersection of the first value range and the second value range; or
if the eDRX cycle of the first terminal exceeds the first threshold, determining that the at least one parameter includes the DRX cycle of the first terminal.

In a possible design, the determining the at least one parameter based on the intersection of the first value range and the second value range includes: if the intersection of the first value range and the second value range includes only one value, determining that the at least one parameter includes the value; or if the intersection of the first value range and the second value range includes a plurality of values, determining that the at least one parameter includes a maximum value in the plurality of values.

In a possible design, the determining the at least one parameter based on the intersection of the first value range and the second value range includes: if the intersection of the first value range and the second value range includes only one value, determining that the at least one parameter includes the maximum value in the second value range; or if the intersection of the first value range and the second value range is an empty set, determining that the at least one parameter includes the maximum value in the second value range; or if the intersection of the first value range and the second value range includes a plurality of values, determining that the at least one parameter includes a maximum value in the plurality of values.

In a possible design, the eDRX cycle of the first terminal includes an eDRX cycle configured by an upper layer for the first terminal and/or an eDRX cycle configured by an RRC layer for the first terminal. The method further includes: if the eDRX information of the first terminal includes the eDRX cycle configured by the upper layer for the first terminal and the eDRX cycle configured by the RRC layer for the first terminal, determining that the eDRX information of the first terminal indicates a smaller value in the eDRX cycle configured by the upper layer for the first terminal and the eDRX cycle configured by the RRC layer for the first terminal; or if the eDRX information of the first terminal includes either the eDRX cycle configured by the upper layer for the first terminal or the eDRX cycle configured by the RRC layer for the first terminal, determining that the eDRX information of the first terminal indicates the eDRX cycle.

In a possible design, the eDRX cycle of the first terminal includes the eDRX cycle configured by the upper layer for the first terminal and/or the eDRX cycle configured by the RRC layer for the first terminal. The determining the at least one parameter based on the eDRX information of the first terminal and the reference information includes: if the RRC mode is an RRC idle mode, determining the at least one parameter based on the eDRX cycle configured by the upper layer for the first terminal; or if the RRC mode is an RRC inactive mode, determining the at least one parameter based on the eDRX cycle configured by the upper layer and/or the eDRX cycle configured by the RRC layer for the first terminal.

According to a third aspect, a communication method is provided, and is applied to a second terminal or a chip in a second terminal. The second terminal provides a relay service for a first terminal. For example, the method is applied to the first terminal. The method includes: receiving first information, where the first information includes at least one parameter, first cycle information is configured for the first terminal, the first cycle information indicates an eDRX cycle of the first terminal, the at least one parameter is related to second information, and the second information includes at least one of the following: partial information or all information in the first cycle information, and a PTW of the first terminal; and determining second cycle information based on the first information, and determining, based on the second cycle information, a cycle in which a network pages the first terminal.

In a possible design, that the at least one parameter is related to the second information includes: The at least one parameter includes partial information or all information in the second information; and/or the at least one parameter includes a statistical value of the partial information or all the information in the second information. Optionally, the statistical value of the partial information or all the information in the second information is a minimum value of the partial information or all the information in the second information.

In a possible design, that the second terminal receives the first information includes: When capability information of the second terminal and capability information of a serving cell of the second terminal meet a preset condition, the second terminal receives the first information. The capability information of the second terminal indicates that the second terminal supports or does not support an eDRX mechanism, the capability information of the serving cell indicates that the serving cell supports or does not support the eDRX mechanism, and the preset condition includes that the second terminal supports the eDRX mechanism and the serving cell supports the eDRX mechanism.

In a possible design, the method further includes: The second terminal sends the capability information of the second terminal and/or the capability information of the serving cell of the second terminal to the first terminal.

In a possible design, that the serving cell supports the eDRX mechanism includes: When an RRC mode of the first terminal is an RRC idle mode and/or an RRC inactive mode, the serving cell supports the eDRX mechanism. That the second terminal receives the first information includes: when the serving cell supports the eDRX mechanism, receiving the first information.

In a possible design, the method further includes: sending sixth indication information to the first terminal. The sixth indication information indicates that the second terminal is capable of receiving, for the first terminal, a paging message sent by the network to the first terminal, or indicates the first terminal to send the at least one parameter.

In a possible design, when the capability information of the second terminal and the capability information of the serving cell of the second terminal meet the preset condition, the sixth indication information is sent to the first terminal.

According to a fourth aspect, a communication method is provided, and is applied to a second terminal or a chip in a second terminal. The second terminal provides a relay service for a first terminal, and the second terminal and/or a serving cell of the first terminal does not support an eDRX mechanism. For example, the method is applied to the second terminal. The method includes: receiving first information, where the first information is determined based on eDRX information of the first terminal, and the first information includes at least one parameter; determining second cycle information based on the first information; and determining, based on the second cycle information, a cycle in which a network pages the first terminal.

According to a fifth aspect, a communication apparatus is provided. The apparatus is a first terminal or is located in a first terminal, and a second terminal provides a relay service for the first terminal. The apparatus includes a module, a unit, or a means used to perform the method in the first aspect or any possible design of the first aspect.

For example, the apparatus may include:
a processing module, configured to determine first information, where the first information includes at least one parameter; and
an interface module, configured to send the first information to the second terminal, where first cycle information is configured for the first terminal, the first cycle information indicates an eDRX cycle of the first terminal, the at least one parameter is used to determine second cycle information, the second cycle information is used to determine a cycle in which a network pages the first terminal, the at least one parameter is related to second information, and the second information includes at least one of the following: partial information or all information in the first cycle information, and a PTW of the first terminal.

According to a sixth aspect, a communication apparatus is provided. The apparatus is a first terminal or is located in a first terminal, a second terminal provides a relay service for the first terminal, and the second terminal and/or a serving cell of the first terminal does not support an eDRX mechanism. The apparatus includes a module, a unit, or a means used to perform the method in the second aspect or any possible design of the second aspect.

For example, the apparatus may include:
a processing module, configured to determine first information based on eDRX information of the first terminal, where the first information includes at least one parameter; and
an interface module, configured to send the first information to the second terminal, where the at least one parameter is used to determine second cycle information, and the second cycle information is used to determine a cycle in which a network pages the first terminal.

According to a seventh aspect, a communication apparatus is provided. The apparatus is a second terminal or is located in a second terminal, and the second terminal provides a relay service for a first terminal. The apparatus includes a module, a unit, or a means used to perform the method in the third aspect or any possible design of the third aspect.

For example, the apparatus may include:
an interface module, configured to: receive first information, where the first information includes at least one parameter, first cycle information is configured for the first terminal, the first cycle information indicates an eDRX cycle of the first terminal, the at least one parameter is related to second information, and the second information includes at least one of the following: partial information or all information in the first cycle information, and a PTW of the first terminal; and determine second cycle information based on the first information; and
a processing module, configured to determine, based on the second cycle information, a cycle in which a network pages the first terminal.

According to an eighth aspect, a communication apparatus is provided. The apparatus is a second terminal or is located in a second terminal, the second terminal provides a relay service for a first terminal, and the second terminal and/or a serving cell of the first terminal does not support an eDRX mechanism. The apparatus includes a module, a unit, or a means used to perform the method in the fourth aspect or any possible design of the fourth aspect.

For example, the apparatus may include:
an interface module, configured to receive first information, where the first information is determined based on eDRX information of the first terminal, and the first information includes at least one parameter; and
a processing module, configured to determine second cycle information based on the first information, and determine, based on the second cycle information, a cycle in which a network pages the first terminal.

According to a ninth aspect, a communication apparatus is provided, and includes a processor. The processor is coupled to a memory, and the memory is configured to store a program or instructions. When the program or the instructions are executed by the processor, the communication apparatus is enabled to perform the method in the first aspect or any possible design of the first aspect, or the communication apparatus is enabled to perform the method in the second aspect or any possible design of the second aspect, or the communication apparatus is enabled to perform the method in the third aspect or any possible design of the third aspect, or the communication apparatus is enabled to perform the method in the fourth aspect or any possible design of the fourth aspect.

According to a tenth aspect, a computer-readable storage medium is provided. The storage medium stores a computer program or instructions. When the computer program or the instructions are executed by a communication apparatus, the method in the first aspect or any possible design of the first aspect is implemented, or the method in the second aspect or any possible design of the second aspect is implemented, or the method in the third aspect or any possible design of the third aspect is implemented, or the method in the fourth aspect or any possible design of the fourth aspect is implemented.

According to an eleventh aspect, a computer program product is provided. The computer program product includes a computer program or instructions. When the computer program or the instructions are run by a communication apparatus, the method in the first aspect or any possible design of the first aspect is performed, or the method in the second aspect or any possible design of the second aspect is performed, or the method in the third aspect or any possible design of the third aspect is performed, or the method in the fourth aspect or any possible design of the fourth aspect is performed.

According to a twelfth aspect, an embodiment of this application provides a chip. The chip may include a processor, and may further include a memory (or the chip is coupled to a memory). The chip executes program instructions in the memory, to perform the method in the first aspect or any possible design of the first aspect, or the method in the second aspect or any possible design of the second aspect, or the method in the third aspect or any possible design of the third aspect, or the method in the fourth aspect or any possible design of the fourth aspect. "Coupling" means that two components are directly or indirectly combined with each other. For example, coupling may mean an electrical connection between the two components.

According to a thirteenth aspect, this application provides a communication system. For example, the communication system may include a first terminal and a second terminal. The first terminal is configured to perform the method in the first aspect or any possible design of the first aspect, and the second terminal is configured to perform the method in the third aspect or any possible design of the third aspect; or the first terminal is configured to perform the method in the second aspect or any possible design of the second aspect, and the second terminal is configured to perform the method in the fourth aspect or any possible design of the fourth aspect.

Optionally, the communication system may further include a network device.

For technical effect that can be achieved in the third aspect to the twelfth aspect, refer to descriptions of technical effect that can be achieved by corresponding possible design solutions in the first aspect or the second aspect. Details are not described herein again in this application.

### BRIEF DESCRIPTION OF DRAWINGS

FIG. 1 is a diagram of a communication system according to an embodiment of this application;
FIG. 2A is a diagram of a U2N user plane protocol stack;
FIG. 2B is a diagram of a U2N control plane protocol stack;
FIG. 3 is a diagram of several scenarios of U2N relay coverage;
FIG. 4 is a diagram of comparison between a DRX mechanism and an eDRX mechanism;
FIG. 5 is a flowchart of a communication method according to an embodiment of this application;
FIG. 6 is a diagram in which a CN PTW overlaps a RAN PTW according to an embodiment of this application;
FIG. 7 is a flowchart of another communication method according to an embodiment of this application;
FIG. 8 is a diagram of a communication apparatus according to an embodiment of this application; and
FIG. 9 is a diagram of another communication apparatus according to an embodiment of this application.

### DESCRIPTION OF EMBODIMENTS

The terms "system" and "network" may be used interchangeably in embodiments of this application. "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following items" or a similar expression thereof means any combination of these items, including any combination of a single item or a plurality of items. For example, at least one item of a, b, or c may represent a, b, c, a and b, b and c, a and c, or a, b, and c. In this application, "A exceeds B" indicates that A is greater than B, and "A does not exceed B" indicates that A is less than or equal to B.

In addition, unless otherwise moded, ordinal numbers such as "first" and "second" in embodiments of this application are for distinguishing between a plurality of objects, but are not intended to limit an order, a time sequence, priorities, or importance of the plurality of objects. For example, a first priority criterion and a second priority criterion are merely used to distinguish different criteria, and are not used to indicate different content, priorities, or importance degrees of the two types of criteria.

In addition, the terms "include/comprise" and "have" in embodiments, claims, and accompanying drawings of this application are not exclusive. For example, a process, a method, a system, a product, or a device that includes a series of steps or modules is not limited to the listed steps or modules, and may further include steps or modules that are not listed.

Embodiments of this application are mainly applied to a scenario in which one device provides a relay service for another device (which is referred to as a relay scenario for short), for example, a user equipment-to-network (UE-to-network, U2N) relay (relay) scenario, that is, a relay terminal (relay UE) provides a connection to a network for a remote terminal (remote UE). It may be understood that, in the relay scenario, there may be one or more relay terminals. For ease of description, the following mainly uses one relay terminal as an example.

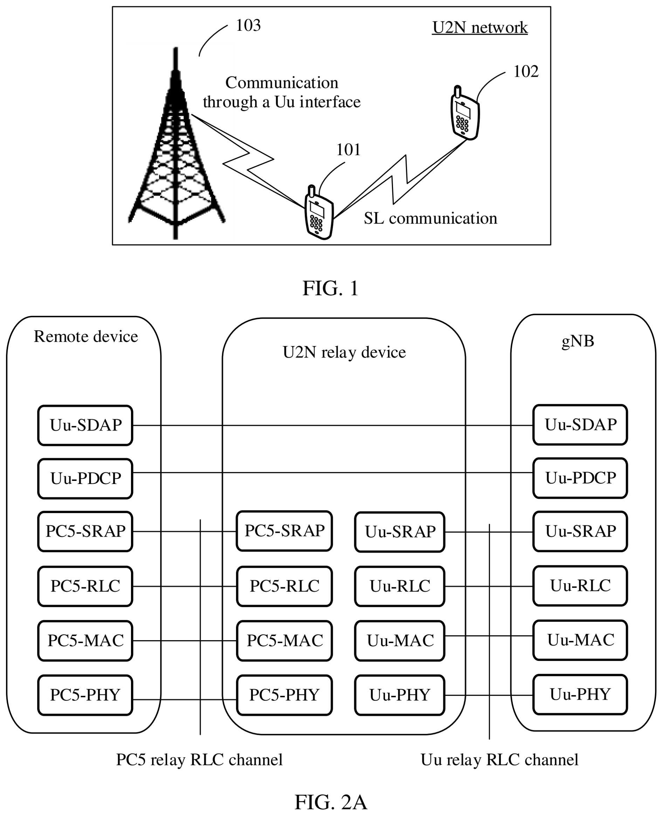

FIG. 1 is a diagram of a communication system according to an embodiment of this application. The communication system includes a terminal device 101, a terminal device 102, and a network device 103.

The network device 103 is configured to perform access management and switching management on the terminal device, and communicate with a core network.

The network device 103 includes an access network (radio access network, RAN) device. The access network device may also be sometimes referred to as an access network node, a RAN node, a RAN entity, an access node, a RAN network element, or the like, and is a part of the communication system, to help the terminal implement radio access.

The access network device is, for example, a base station (base station, BS), or includes a base station, a radio resource management device configured to control the base station, and the like. For example, the base station may include an evolved NodeB (NodeB, eNB, or e-NodeB, evolved NodeB) in a long term evolution (long term evolution, LTE) system or a long term evolution-advanced (long term evolution-advanced, LTE-A) system; may include a next generation NodeB (next generation NodeB, gNB), a next generation evolved NodeB (next generation evolved NodeB, ng-eNB), or an enhanced next generation NodeB (enhanced next generation NodeB, en-gNB) in a 5th generation (the 5th generation, 5G) mobile communication technology new radio (new radio, NR) system; and may include a central unit (central unit, CU) and a distributed unit (distributed unit, DU) in a cloud access network (cloud radio access network, Cloud RAN) system. This is not limited in embodiments of this application.

In a possible scenario, a plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

Network elements in the core network are classified into two types: a user plane network element and a control plane network element. The user plane network element includes a user plane function (user plane function, UPF) network element, and the control plane network element includes an access and mobility management function (access and mobility management function, AMF) network element, a session management function (session management function, SMF) network element, a unified data management (unified data management, UDM) network element, a policy control function (policy control function, PCF) network element, an application function (application function, AF) network element, an authentication server function (authentication server function, AUSF) network element, a network slice selection function (network slice selection function, NSSF) network element, a network slice-specific authentication and authorization function (network slice-specific authentication and authorization function, NSSAAF) network element, a network exposure function (network exposure function, NEF) network element, and the like.

The terminal device may also be referred to as a terminal, user equipment (user equipment, UE), a mobile station, a mobile terminal, or the like. The terminal device may be widely used in various scenarios, for example, device-to-device (device-to-device, D2D) communication, vehicle-to-everything (vehicle to everything, V2X) communication, machine-type communication (machine-type communication, MTC), the Internet of things (Internet of things, IOT), virtual reality, augmented reality, industrial control, self-driving, telemedicine, a smart grid, a smart furniture, a smart office, smart wearable, smart transportation, and a smart city. The terminal device may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. Neither a specific technology nor a specific device form used by the terminal device is limited in embodiments of this application.

The terminal device 101 can communicate with one or more network devices in one or more communication systems, and accept a network service provided by the network device. The network device herein includes but is not limited to the network device 103 shown in the figure. For example, in this embodiment of this application, the terminal device 101 and the terminal device 102 each may be a mobile phone (or referred to as a "cellular" phone) or a computer having a mobile terminal. Alternatively, the terminal device 101 and the terminal device 102 each may be a portable, pocket-sized, handheld, computer built-in, or vehicle-mounted mobile apparatus. Alternatively, the terminal device 101 and the terminal device 102 each may be a communication chip having a communication module. It should be understood that the terminal device 101 may be configured to support communication with the network device through a universal user to network interface (universal user to network interface, Uu).

The terminal device 101 and the terminal device 102 may be configured to support sidelink (SideLink, SL) transmission. Different from an uplink (uplink) or a downlink (downlink), the SL is a communication mechanism in which devices directly communicate with each other without using a network device. For example, SL communication may be performed between the terminal device 101 and the terminal device 102 through a direct communication (PC5) air interface (namely, an air interface used for SL communication between terminals). It should be understood that, in this application, SL communication may include SL unicast communication, multicast communication, and broadcast communication.

Further, the terminal device 101 and the terminal device 102 may be configured to support relay (relay) transmission. For example, the terminal device 101 may provide a relay service for the terminal device 102, and provide a connection to the network device 103 for the terminal device 102, that is, implement a U2N relay function. For example, the terminal device 101 may receive information from the network device and forward the information to the terminal device 102, and receive information from the network device 101 and forward the information to the network device 103. Therefore, the terminal device 102 can communicate with the network device 103 by using the terminal device 101.

For ease of description, in this specification, a terminal device that provides a relay service is referred to as a relay terminal (relay UE), and a terminal device that uses the relay service is referred to as a remote terminal (remote UE). For example, in the scenario shown in FIG. 1, the terminal device 101 may be used as a relay terminal, and the terminal device 102 may be used as a remote terminal.

The communication system shown in FIG. 1 may support various radio access technologies (radio access technology, RAT). For example, the communication system shown in FIG. 1 may be a 4th generation (4th generation, 4G) communication system (which may also be referred to as a long term evolution (long term evolution, LTE) communication system), a 5G communication system (which may also be referred to as a new radio (new radio, NR) communication system), a 6G communication system, or a future-oriented evolved system.

It may be understood that a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and emergence of new service scenarios, the technical solutions provided in embodiments of this application are also applicable to similar technical problems.

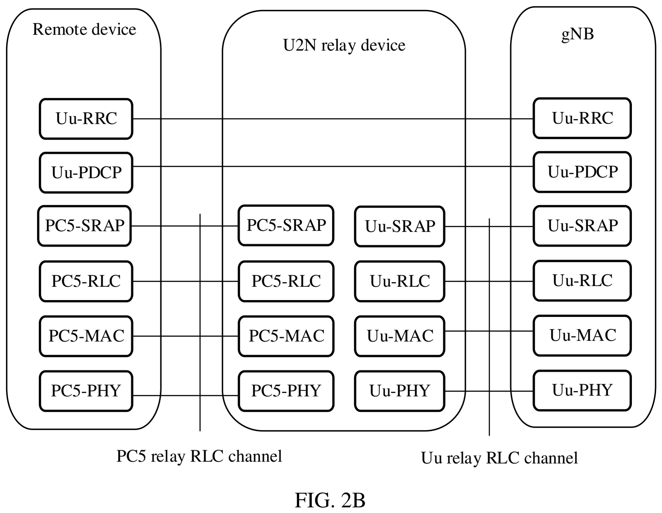

Protocol stacks in a relay scenario include a user plane protocol stack and a control plane protocol stack. FIG. 2A and FIG. 2B are respectively diagrams of a U2N user plane protocol stack and a U2N control plane protocol stack in a U2N relay scenario. Relays include a layer 3 (layer 3, L3) relay and a layer 2 (layer 2, L2) relay. For the L2 U2N relay, regardless of a user plane or a control plane, a relay adaptation layer (namely, a relay protocol (sidelink relay adaptation protocol, SRAP) layer) is located above a radio link control (radio link control, RLC) layer of a Uu interface between a relay terminal and a network device (for example, a gNB), and a data packet of the relay terminal is relayed below a packet data convergence protocol (packet data convergence protocol, PDCP) layer. In FIG. 2A and FIG. 2B, a PC5-SRAP is used to represent the relay adaptation layer. The layer 3 relay is a relay based on an Internet protocol (Internet protocol, IP) layer.

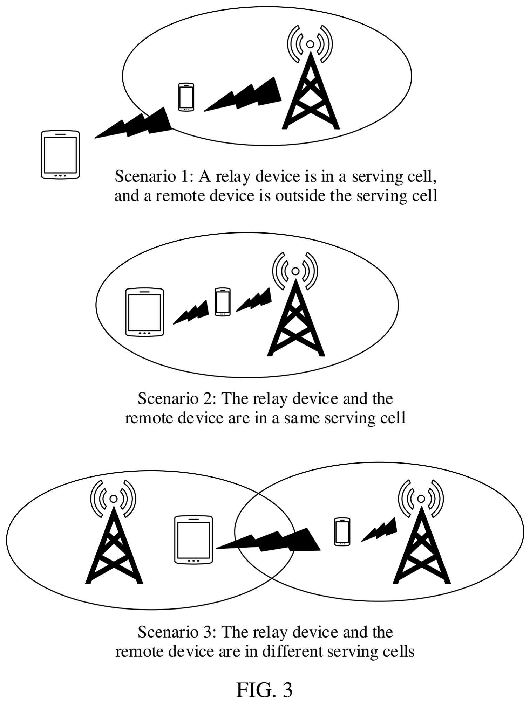

Refer to FIG. 3. U2N relay coverage scenarios include the following several types.

Scenario 1: The relay terminal is in a serving cell, and a remote terminal is outside the serving cell.

Scenario 2: The relay terminal and the remote terminal are in a same serving cell.

Scenario 3: The relay terminal and the remote terminal are in different serving cells.

For the L3 relay, after the remote terminal establishes a connection to a network by using the relay terminal, the relay terminal and the remote terminal may be in a same cell or may be in different cells. For the L2 relay, after the remote terminal establishes a connection to a network by using the relay terminal, both the relay terminal and the remote device are controlled by a serving cell of the relay terminal. In addition, before the remote terminal establishes a connection to the relay terminal, the relay device and the remote terminal may be in a same cell or may be in different cells.

It should be understood that when the relay terminal provides a service of connecting to the network for the remote terminal, the serving cell of the relay terminal may also be considered as a serving cell of the remote terminal.

A discontinuous reception (discontinuous reception, DRX) mechanism is introduced to the 3rd generation partnership project (3rd generation partnership project, 3GPP), so that energy can be saved for a new radio (new radio, NR) terminal device. The terminal device may monitor a physical downlink control channel (physical downlink control channel, PDCCH) based on the DRX mechanism. When the DRX mechanism is configured for the terminal device, the terminal device cyclically enters a sleep mode (sleep mode) at some time. In the sleep mode, the terminal device does not need to monitor the PDCCH. When the terminal device needs to monitor the PDCCH, the terminal device wakes up (wake up) from the sleep mode, to reduce power of the terminal device. It may be understood that DRX is used as an example for description below. In different communication systems, DRX may alternatively be replaced with another name.

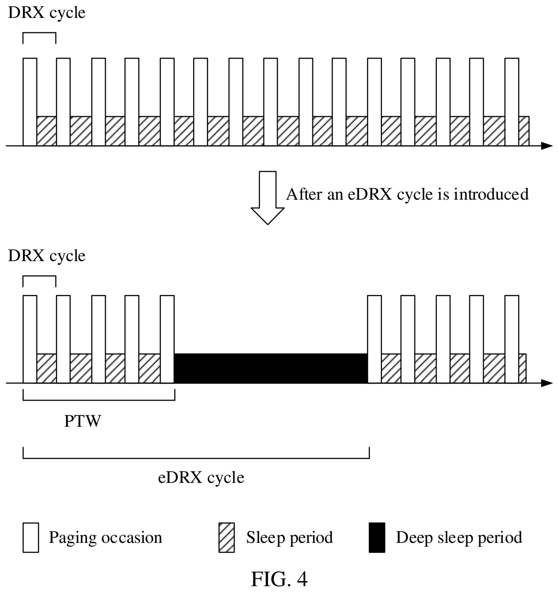

Further, to adapt to low power consumption of the Internet of things, the DRX mechanism may be further extended. In this specification, the extended DRX mechanism is referred to as an extended discontinuous reception (extended discontinuous reception, eDRX) mechanism. It may be understood that eDRX may alternatively be replaced with another name. A cycle of the eDRX mechanism is referred to as an eDRX cycle, and the eDRX cycle is usually greater than a DRX cycle. In the eDRX cycle, the terminal device is in a deep sleep period most of time, and monitors a paging message only in a paging time window (paging time window, PTW) based on the DRX mechanism. FIG. 4 is a diagram of comparison between a DRX mechanism and an eDRX mechanism. It may be understood that eDRX is used as an example for description below. In different communication systems, eDRX may alternatively be replaced with another name.

Paging (paging) in NR is used as an example. When a core network or an access network needs to send data to UE, a paging message is sent to enable a terminal device in a radio resource control (radio resource control, RRC) idle (IDLE or idle) mode or an RRC inactive (inactive) mode to enter a connected mode. The paging message is sent to the terminal device at a position of a PDSCH resource, and the PDSCH resource is indicated by a PDCCH scrambled with a paging radio network temporary identifier (paging radio network temporary identifier, P-RNTI). In other words, to obtain the paging message, the terminal device first needs to cyclically wake up and monitor the PDCCH channel scrambled with the P-RNTI, and then parse downlink control information (downlink control information, DCI), to further obtain a time-frequency position of the PDSCH channel. Finally, the terminal device receives and parses the paging message at the time-frequency position of the PDSCH channel.

In frequency domain, frequency domain resource occupied by the paging message is specified by the PDCCH scrambled with the P-RNTI. However, in time domain, the terminal device receives the paging message only on a paging occasion (paging occasion, PO) of a specific radio frame (which may be referred to as a paging frame (paging frame, PF)) in a paging cycle of the terminal device. Therefore, the gNB needs to send the paging message through an air interface at the moment, and the terminal device may receive the paging message at this moment (namely, the PO).

It may be understood that the PF is a radio frame, and a single PF may include one or more POs. The PO is a set of PDCCH monitoring occasions (PDCCH monitoring occasions), and may include a plurality of slots (slots), subframes, or symbols. On the PO, there may be a PDCCH that is scrambled with a P-RNTI and that indicates a paging message. When DRX is used, the terminal device needs to detect only one PO in each DRX cycle. In other words, for each terminal device, the gNB may send the paging message on only one PO in each paging cycle. Therefore, the DRX cycle and the paging cycle completely overlap in time domain. In this specification, the DRX cycle and the paging cycle may be considered as a same concept.

In time domain, the terminal device attempts to receive the paging message on a specific PO of a specific PF frame in the paging cycle. The gNB needs to send the paging message through the air interface at this moment, so that the terminal device may receive the paging message at this moment.

NR paging includes core network paging (CN paging) and access network paging (RAN paging). CN paging is initiated by the core network, and may be performed on a terminal device in an idle mode or an inactive mode. RAN paging is initiated by a RAN side, and is performed only on a terminal device in an inactive mode.

In the relay scenario, when the network (including the core network and/or the access network) pages the remote terminal, after the network sends a paging message in a paging cycle of the remote terminal, the relay device needs to receive the paging message and forward the paging message to the remote terminal. In this case, the remote terminal needs to provide information related to the paging cycle of the remote terminal (the information may be the paging cycle of the remote terminal, or may be another parameter used to determine the paging cycle of the remote terminal) for the relay terminal, so that the relay terminal can monitor the paging message when the paging cycle of the remote terminal arrives.

For example, a method in which the remote terminal sends, to the relay terminal, the information related to the paging cycle includes:
1. If the remote terminal does not store valid versions of one or more required system information blocks (System Information Block, SIB), before the remote terminal sends, to the relay terminal, a RemoteUEInformationSidelink (RemoteUEInformationSidelink) message used to request the SIB,
   the RemoteUEInformationSidelink message includes sl-RequestedSIB-List, to indicate the SIB or SIBs requested by the remote terminal.
2. If the remote terminal has not previously sent an sl-PagingInfo-RemoteUE (sl-PagingInfo-RemoteUE) information element to the relay terminal in the RemoteUEInformationSidelink message, the sl-PagingInfo-RemoteUE information element is set as follows:
   (1) If the remote terminal is in an RRC_IDLE mode,
      an sl-PagingIdentityRemoteUE information element includes an ng-5G serving-temporary mobile subscriber identity (ng-5G-serving Temporary Mobile Subscriber Identity, ng-5G-S-TMSI).
      If an upper layer configures a specific DRX cycle of the remote terminal, sl-PagingCycleRemoteUE is set to be the specific DRX cycle configured by the upper layer for the remote terminal.
   (2) Otherwise, if the remote terminal is in an RRC_inactive mode,
      sl-PagingIdentityRemoteUE includes an ng-5G-S-TMSI and a full inactive-radio network temporary identifier (Full inactive-radio network temporary identifier, full I-RNTI).
   If an upper layer configures a specific DRX cycle of the remote terminal, sl-PagingCycleRemoteUE is set to be a minimum value of the specific DRX cycle (which may be the specific DRX cycle configured by the upper layer or a specific DRX cycle configured by RRC for the remote terminal) of the remote terminal. Otherwise, sl-PagingCycleRemoteUE is set to be the specific DRX cycle configured by the RRC for the remote terminal.
3. The RemoteUEInformationSidelink message is submitted to a lower layer for transmission.

It can be learned that when the remote terminal sends, to the relay terminal, the information related to the paging cycle (for example, a value, of the cycle, included in sl-PagingCycleRemoteUE), only a case in which the remote terminal supports the DRX mechanism is considered, and a case in which the remote terminal supports the eDRX mechanism is not considered. When the remote terminal supports the eDRX mechanism, reliability of a relay service provided by the relay terminal for the remote terminal is low, and power consumption of the terminal is high.

In view of this, the technical solutions in embodiments of this application are provided. When the remote terminal supports the eDRX mechanism, at least one parameter may be sent to the relay terminal based on information (for example, an eDRX cycle and/or a PTW) related to the eDRX mechanism of the remote terminal, so that the relay terminal can provide, for the remote terminal, a relay service that adapts to the eDRX mechanism. This further improves reliability of a relay function, and reduces power consumption of the terminal.

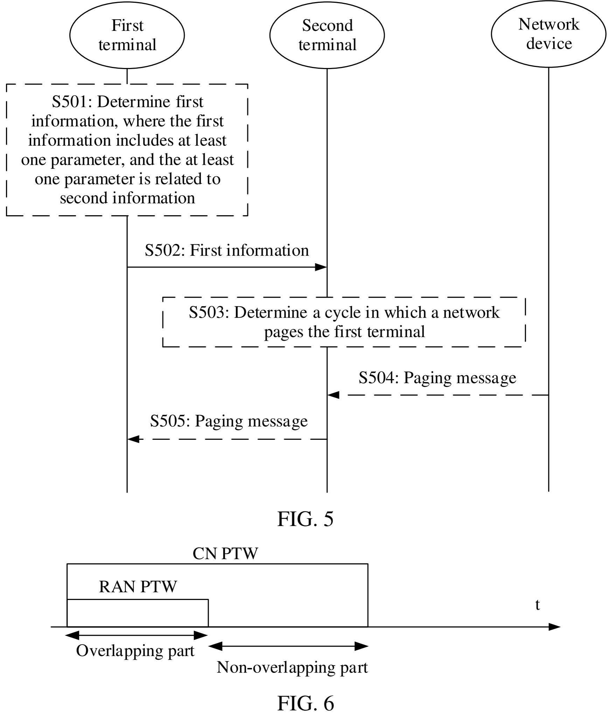

FIG. 5 is a flowchart of a communication method according to an embodiment of this application. An example in which the method is applied to the scenario shown in FIG. 1 is used. It may be understood that this application is described by using an example in which a first terminal and a second terminal are used as execution bodies of an interaction schematic. However, the execution bodies of the interaction schematic are not limited in this application. For example, the first terminal in the method provided in this application may be a chip, a chip system, or a processor used in the first terminal, or may be a logical node, a logical module, or software that can implement all or some functions of the first terminal. The second terminal in the method provided in this application may alternatively be a chip, a chip system, or a processor used in the second terminal, or may be a logical node, a logical module, or software that can implement all or some functions of the second terminal.

S502: The first terminal sends first information, where the first information includes at least one parameter. Correspondingly, the second terminal receives the first information from the first terminal.

The second terminal provides a relay service for the first terminal. In a possible manner, the first terminal is a remote terminal, and the second terminal is a relay terminal. For example, the second terminal may be the terminal device 101 in the communication system shown in FIG. 1, and the first terminal may be the terminal device 102 in the communication system shown in FIG. 1. The second terminal may provide a U2N relay service for the first terminal.

Optionally, the first information further includes a paging identifier, and the paging identifier indicates that a network pages the first terminal.

Optionally, the method further includes S501: The first terminal determines the first information. Optionally, S501 is performed before S502.

The first information includes at least one parameter, and the at least one parameter is related to second information. For example, the first terminal determines the at least one parameter based on the second information.

Optionally, the method further includes S503: The second terminal determines a cycle in which the network pages the first terminal. For example, the second terminal determines second cycle information based on the first information, and determines, based on the second cycle information, the cycle in which the network pages the first terminal. Optionally, S503 is performed after S502.

In FIG. 5, optional steps are identified by dashed lines.

In embodiments of this application, first cycle information is configured for the first terminal, and the first cycle information indicates an eDRX cycle. The first cycle information may be specifically the eDRX cycle (for example, a cycle value that indicates a period of time such as N radio frames, where N is a positive integer), or may be another parameter used to determine the eDRX cycle. This is not limited in this application. For ease of description, in this specification, descriptions similar to "the first cycle information is configured for the first terminal" may also be replaced with descriptions of "the eDRX cycle is configured for the first terminal".

It may be understood that, in this application, "configure" may be replaced with other descriptions, for example, "have" and "store".

In a possible manner, that the first cycle information is configured for the first terminal means that the network configures the first cycle information for the first terminal. For example, the network sends the first cycle information to the first terminal, and the first terminal receives the first cycle information; or the network sends indication information of the first cycle information to the first terminal, and the first terminal receives the indication information and determines the first cycle information based on the indication information. The network may send the first cycle information or the indication information of the first cycle information to the first terminal by using the second terminal. It should be understood that a manner in which the network configures the first cycle information for the first terminal herein is merely an example. Actually, there may be another configuration manner.

There may be one or more types of eDRX cycles. In embodiments of this application, an example in which there is only one type of eDRX cycle is mainly used. Therefore, the type of the eDRX cycle may also be replaced with a quantity of eDRX cycles, that is, there may be one or more eDRX cycles. For example, the eDRX cycle may include a first eDRX cycle and/or a second eDRX cycle. The first eDRX cycle is configured by an upper layer (namely, a core network) for the first terminal, and the second eDRX cycle is configured by an RRC layer (namely, an access network) for the first terminal. Correspondingly, the first cycle information may include first indication information and/or second indication information, the first indication information indicates the first eDRX cycle, and the second indication information indicates the second eDRX cycle. Optionally, the first indication information is the first eDRX cycle, and the second indication information is the second eDRX cycle. For ease of description, the following uses an example in which the first indication information is the first eDRX cycle and the second indication information is the second eDRX cycle.

In embodiments of this application, the at least one parameter is used to determine the second cycle information (for example, the second terminal determines the second cycle information based on the at least one parameter in S503 in the following). The second cycle information indicates the cycle in which the network pages the first terminal (the cycle is referred to as a "paging cycle" for short), and the cycle in which the network pages the first terminal may include a cycle in which the access network pages the first terminal and/or a cycle in which the core network pages the first terminal.

In embodiments of this application, the at least one parameter is related to the second information. For example, the first terminal determines the at least one parameter based on the second information.

The second information includes at least one of the following: partial information or all information (for example, the first indication information and/or the second indication information) in the first cycle information, and a PTW of the first terminal.

In embodiments of this application, the first terminal may determine the first information based on at least one of threshold information, eDRX information, DRX information, PTW information, and RRC mode information. In other words, the second information may specifically include at least one of the threshold information, the eDRX information, the DRX information, the PTW information, and the RRC mode information.

The threshold information indicates a first threshold, and the first threshold is a maximum value in a value range of an eDRX cycle.

The eDRX cycle information indicates the eDRX cycle of the first terminal.

The DRX information indicates a DRX cycle of the first terminal.

The PTW information indicates the PTW of the first terminal.

The RRC mode information indicates an RRC mode of the first terminal.

In a possible design, the first terminal determines the at least one parameter in the first information based on the threshold information and the eDRX information.

Optionally, the first terminal determines the at least one parameter based on a value relationship between the first threshold and the eDRX cycle of the first terminal. For example, if any eDRX cycle of the first terminal is less than or equal to the first threshold, the at least one parameter is determined based on the any discontinuous reception cycle, where the second information includes the any eDRX cycle. If at least one eDRX cycle of the first terminal exceeds the first threshold, the at least one parameter is determined based on the DRX cycle of the first terminal and/or a default DRX cycle, where the second information includes the PTW of the first terminal, and further includes the DRX cycle of the first terminal or the default DRX cycle. In other words, if an eDRX cycle that does not exceed the first threshold is configured for the first terminal, the eDRX cycle may be used to determine the at least one parameter. If an eDRX cycle that exceeds the first threshold is configured for the first terminal, the PTW may be used to determine the at least one parameter.

For example, when an eDRX cycle indicated by any information in the first cycle information does not exceed the first threshold, the second information includes the any information. In other words, if an eDRX cycle that does not exceed the first threshold is configured for the first terminal, the eDRX cycle that does not exceed the first threshold may be used to determine the at least one parameter. For example, the first terminal may determine the at least one parameter based on the eDRX cycle that does not exceed the first threshold.

When an eDRX cycle indicated by at least one piece of information in the first cycle information exceeds the first threshold, the second information includes the PTW. In other words, if an eDRX cycle that exceeds the first threshold is configured for the first terminal, the PTW may be used to determine the at least one parameter. For example, the first terminal may determine the at least one parameter based on the PTW.

The first threshold is a maximum value in a candidate parameter set used to configure the cycle in which the network pages the first terminal. For example, the first threshold is a maximum paging cycle specified in a protocol or supported by a communication system. For example, the first threshold is 1024 radio frames. It may be understood that the first threshold herein is merely an example, and is not limited to 1024 radio frames actually.

It may be understood that, in embodiments of this application, descriptions similar to "the first terminal determines the at least one parameter based on the eDRX cycle that does not exceed the first threshold" mean that the first terminal may also determine the at least one parameter based on another parameter, for example, the first terminal may perform determining based on the eDRX cycle that does not exceed the first threshold and another parameter (for example, a DRX cycle in the following) of the eDRX cycle that does not exceed the first threshold.

In a possible design, the first terminal may determine the at least one parameter in the first information based on the eDRX information and the DRX information.

For example, the eDRX cycle of the first terminal includes the eDRX cycle configured by the upper layer and/or the eDRX cycle configured by the RRC layer for the first terminal, and the DRX cycle configured for the first terminal includes a DRX cycle configured by the upper layer and/or a DRX cycle configured by the RRC layer for the first terminal.

Optionally, if the upper layer does not configure the eDRX cycle for the first terminal, the at least one parameter is determined based on the DRX cycle configured by the upper layer for the first terminal and/or the default DRX cycle, where the second information includes a PTW configured by the upper layer for the first terminal, and further includes the DRX cycle configured by the upper layer for the first terminal and/or the default DRX cycle; and/or if the RRC layer does not configure the eDRX cycle for the first terminal, the at least one parameter is determined based on the DRX cycle configured by the RRC layer for the first terminal and/or the default DRX cycle, where the second information includes a PTW configured by the RRC layer for the first terminal, and further includes the DRX cycle configured by the RRC layer for the first terminal and/or the default DRX cycle. In other words, if an eDRX cycle that does not exceed the first threshold is configured for the first terminal, the eDRX cycle may be used to determine the at least one parameter. If an eDRX cycle that exceeds the first threshold is configured for the first terminal, the PTW, the DRX cycle, and/or the default DRX cycle may be used to determine the at least one parameter.

For example, the second information further includes third cycle information, and the third cycle information indicates a discontinuous reception DRX cycle. The third cycle information may be specifically the DRX cycle (for example, a cycle value that indicates a period of time such as M radio frames, where M is a positive integer), or may be another parameter used to determine the DRX cycle. This is not limited in this application. For ease of description, in this specification, descriptions similar to "the third cycle information is configured for the first terminal" may also be replaced with descriptions of "the DRX cycle is configured for the first terminal".

There may be one or more types of DRX cycles. This is not limited in this application. In embodiments of this application, an example in which there is only one type of DRX cycle is mainly used. Therefore, the type of the DRX cycle may also be replaced with a quantity of DRX cycles, that is, there may be one or more DRX cycles. For example, the DRX cycle may include at least one of a first DRX cycle, a second DRX cycle, and/or a third DRX cycle. The first DRX cycle is configured by the upper layer (namely, the core network) for the first terminal. The second DRX cycle is configured by the RRC layer (namely, the access network) for the first terminal. The third DRX cycle is the default DRX cycle, for example, a DRX cycle configured in a SIB. Correspondingly, the third cycle information may include at least one of third indication information, fourth indication information, and/or fifth indication information. The third indication information indicates the first DRX cycle, the fourth indication information indicates the second DRX cycle, and the fifth indication information indicates the third DRX cycle. Optionally, the third indication information is the first DRX cycle, the fourth indication information is the second DRX cycle, and the fifth indication information is the third DRX cycle. In the following, for ease of description, an example in which the third indication information is the first DRX cycle, the fourth indication information is the second DRX cycle, and the fifth indication information is the third DRX cycle is used.

When the eDRX cycle (namely, the first eDRX) configured by the upper layer for the first terminal exceeds the first threshold or the upper layer does not configure the eDRX cycle for the first terminal, the second information includes the third indication information and/or the fifth indication information. For example, when the eDRX cycle configured by the upper layer for the first terminal exceeds the first threshold or the upper layer does not configure the eDRX cycle for the first terminal, the first terminal may not determine the at least one parameter based on the eDRX cycle configured by the upper layer for the first terminal. In this case, the first terminal may determine the at least one parameter based on the default DRX cycle (for example, the third DRX cycle). Alternatively, if the upper layer configures the DRX cycle (namely, the first DRX cycle) for the first terminal, the first terminal may further determine the at least one parameter based on the DRX cycle configured by the upper layer for the first terminal and/or the default DRX cycle.

When the eDRX cycle configured by the RRC layer for the first terminal exceeds the first threshold or the RRC layer does not configure the eDRX cycle for the first terminal, the second information includes the second DRX cycle and/or the third DRX cycle. For example, when the eDRX cycle configured by the RRC layer for the first terminal exceeds the first threshold or the upper layer does not configure the eDRX cycle for the first terminal, the first terminal may not determine the at least one parameter based on the eDRX cycle configured by the RRC layer for the first terminal. In this case, the first terminal may determine the at least one parameter based on the default DRX cycle (for example, the third DRX cycle). Alternatively, if the RRC layer configures the DRX cycle (namely, the second DRX cycle) for the first terminal, the first terminal may further determine the at least one parameter based on the DRX cycle configured by the RRC layer for the first terminal and/or the default DRX cycle.

In a possible design, the first terminal may alternatively determine the at least one parameter in the first information based on the RRC mode information. Optionally, if the RRC mode is an RRC idle mode, the at least one parameter is determined based on the eDRX cycle configured by the upper layer for the first terminal; or if the RRC mode is an RRC inactive mode, the at least one parameter is determined based on the eDRX cycle configured by the upper layer and/or the eDRX cycle configured by the RRC layer for the first terminal. When the first terminal is in different RRC modes, network devices that initiate paging to the first terminal may be different. Therefore, the first terminal determines, based on the RRC mode, a parameter provided for the second terminal, to help improve reliability of determining a paging cycle by the second terminal.

For example, the second information may further include the RRC mode information, the RRC mode information indicates the RRC mode of the first terminal, and the RRC mode of the first terminal may be an RRC idle mode or an RRC inactive mode.

When the RRC mode of the first terminal is the RRC idle mode, the second information includes cycle information configured by the upper layer for the first terminal, and the cycle information configured by the upper layer for the first terminal indicates an eDRX cycle and/or a DRX cycle. For example, when the RRC mode of the first terminal is the RRC idle mode, the first terminal may determine the at least one parameter based on the eDRX cycle and/or the DRX cycle configured by the upper layer.

When the RRC mode of the first terminal is the RRC inactive mode, the second information includes the cycle information configured by the upper layer and/or cycle information configured by the RRC layer for the first terminal, and the cycle information configured by the RRC layer for the first terminal indicates an eDRX cycle and/or a DRX cycle. For example, when the RRC mode of the first terminal is the RRC inactive mode, the first terminal may determine the at least one parameter based on the eDRX cycle and/or the DRX cycle configured by the upper layer and/or the eDRX cycle and/or the DRX cycle configured by the RRC layer.

The core network may initiate paging to the terminal in the RRC idle mode and the terminal in the RRC inactive mode, and the access network initiates paging to the terminal in the RRC inactive mode. Therefore, when the RRC mode of the first terminal is the RRC idle mode, the first terminal may determine the at least one parameter based on the eDRX cycle and/or the DRX cycle configured by the upper layer. When the RRC mode of the first terminal is the RRC inactive mode, the first terminal may determine the at least one parameter based on the eDRX cycle and/or the DRX cycle configured by the upper layer and/or the eDRX cycle and/or the DRX cycle configured by the RRC layer.

In a possible design, the first terminal may determine the at least one parameter in the first information based on the PTW information. Optionally, the PTW of the first terminal includes the PTWs configured by the upper layer and the RRC layer for the first terminal. The determining the at least one parameter in the first information based on the PTW information includes: determining the at least one parameter based on a value relationship between the PTW configured by the upper layer for the first terminal and the PTW configured by the RRC layer for the first terminal; or determining the at least one parameter based on an overlapping mode between the PTW configured by the upper layer for the first terminal and the PTW configured by the RRC layer for the first terminal. For example, the determining the at least one parameter based on the value relationship between the PTW configured by the upper layer for the first terminal and the PTW configured by the RRC layer for the first terminal includes: if the PTW configured by the upper layer for the first terminal is greater than the PTW configured by the RRC layer for the first terminal, determining the at least one parameter based on the DRX cycle configured by the upper layer for the first terminal and/or the default DRX cycle, where the second information includes the PTW configured by the upper layer for the first terminal, and further includes the DRX cycle configured by the upper layer for the first terminal and/or the default DRX cycle; or if the PTW configured by the upper layer for the first terminal is less than the PTW configured by the RRC layer for the first terminal, determining the at least one parameter based on the DRX cycle configured by the RRC layer for the first terminal and/or the default DRX cycle, where the second information includes the PTW configured by the RRC layer for the first terminal, and further includes the DRX cycle configured by the RRC layer for the first terminal and/or the default DRX cycle.

For example, the determining the at least one parameter based on the overlapping mode between the PTW configured by the upper layer for the first terminal and the PTW configured by the RRC layer for the first terminal includes: if the PTW configured by the upper layer for the first terminal does not overlap the PTW configured by the RRC layer for the first terminal, determining the at least one parameter based on the DRX cycles configured by the upper layer and the RRC layer for the first terminal and/or the default DRX cycle, where the second information includes the PTWs configured by the upper layer and the RRC layer for the first terminal, and further includes the DRX cycles configured by the upper layer and the RRC layer for the first terminal and/or the default DRX cycle; or if there is an overlapping part and a non-overlapping part between the PTW configured by the upper layer for the first terminal and the PTW configured by the RRC layer for the first terminal, for the overlapping part, determining the at least one parameter based on the DRX cycle configured by the upper layer for the first terminal, the DRX cycle configured by the RRC layer for the first terminal, and the default DRX cycle, where the second information includes the PTWs configured by the upper layer and the RRC layer for the first terminal, and further includes the DRX cycle configured by the upper layer for the first terminal, the DRX cycle configured by the RRC layer for the first terminal, and the default DRX cycle; and for the non-overlapping part, determining the at least one parameter based on the default DRX cycle and a DRX cycle in the larger PTW in the PTW configured by the upper layer for the first terminal and the PTW configured by the RRC layer for the first terminal, where the second information includes the larger PTW, the DRX cycle in the larger PTW, and the default DRX cycle.

In a possible implementation, that the at least one parameter is related to the second information includes but is not limited to at least one of the following implementations:
Implementation 1: The at least one parameter includes partial information or all information in the second information.

For example, the first terminal may send the partial information or all the information in the second information to the second terminal. For example, the first terminal may send one or more of the PTW, the first indication information (for example, the first eDRX cycle), the second indication information (for example, the second eDRX cycle), the third indication information (for example, the first DRX cycle), the fourth indication information (for example, the second DRX cycle), the fifth indication information (for example, the third DRX cycle), and the like to the second terminal.

Implementation 2: The at least one parameter includes a statistical value of the partial information or all the information in the second information.

For example, the statistical value of the partial information or all the information in the second information is a minimum value of the partial information or all the information in the second information. For example, the first terminal may send a minimum value of at least two of the first indication information (for example, the first eDRX cycle), the second indication information (for example, the second eDRX cycle), the third indication information (for example, the first DRX cycle), the fourth indication information (for example, the second DRX cycle), the fifth indication information (for example, the third DRX cycle), and the like to the second terminal.

For specific content of the second information, refer to the foregoing implementations.

It should be understood that implementations in this specification may be separately implemented, or may be implemented in combination with each other. This is not limited in this application.

The following is an example of a possible combination:
The first terminal is in the RRC idle mode or the RRC inactive mode, and the eDRX cycle is configured for the first terminal. The first terminal may determine, based on different cases, the parameter to be sent to the second terminal. Details are as follows:
1. When the first terminal is in the RRC idle mode, only the core network initiates paging. The upper layer configures the eDRX cycle (represented by T_(eDRX_CN)) for the first terminal:
   (1) If T_(eDRX_CN) does not exceed 1024 radio frames, the first terminal sends T_(eDRX_CN) to the second terminal.
   (2) If T_(eDRX_CN) exceeds 1024 radio frames, and the upper layer configures the DRX cycle (represented by T_(DRX_CN)) for the first terminal, the first terminal sends the PTW and T_(DRX_CN) to the second terminal. Optionally, the first terminal may further send, to the second terminal, the default DRX cycle configured in the SIB.
2. When the first terminal is in the RRC inactive mode, both the core network and the access network initiate paging, and the eDRX cycle of the first terminal may include the eDRX cycle (represented by T_(eDRX_CN)) configured by the upper layer and/or the eDRX cycle configured by the RRC layer (represented by T_(eDRX_RAN)):
   (1) If the upper layer configures T_(eDRX_CN) for the first terminal and the RRC layer configures T_(eDRX_RAN) for the first terminal, and neither T_(eDRX_RAN) nor T_(eDRX_CN) exceeds 1024 radio frames, the first terminal sends a smaller value in T_(eDRX_RAN) and T_(eDRX_CN) to the second terminal.
   (2) If the upper layer configures T_(eDRX_CN) for the first terminal, T_(eDRX_CN) does not exceed 1024 radio frames, the RRC does not configure T_(eDRX_RAN) for the first terminal, and the RRC layer configures the DRX cycle (represented by T_(DRX_RAN)) for the first terminal, the first terminal may send a smaller value in T_(eDRX_CN) and T_(DRX_RAN) to the second terminal, or the first terminal sends both T_(eDRX_CN) and T_(DRX_RAN) to the second terminal.
   (3) The upper layer configures T_(eDRX_CN) for the first terminal, and T_(eDRX_CN) exceeds 1024 radio frames:
      A. If the RRC layer does not configure T_(eDRX_RAN) for the first terminal, the RRC layer configures T_(DRX_RAN) for the first terminal, and/or the upper layer configures T_(DRX_CN) for the first terminal, the first terminal may send the PTW, T_(DRX_RAN), and/or T_(DRX_CN) to the second terminal. Alternatively, if the RRC layer does not configure T_(eDRX_RAN) for the first terminal, the RRC layer configures T_(DRX_RAN) for the first terminal, and the upper layer configures T_(DRX_CN) for the first terminal, the first terminal may send the PTW and a smaller value in T_(DRX_RAN) and T_(DRX_CN) to the second terminal.
      B. If the RRC layer configures T_(eDRX_RAN) for the first terminal, T_(eDRX_RAN) does not exceed 1024 radio frames, and the upper layer configures T_(DRX_CN) for the first terminal, the first terminal may send the PTW, T_(DRX_CN), and/or T_(eDRX_RAN) to the second terminal; or the first terminal may send the PTW, T_(eDRX_RAN), and a smaller value in T_(DRX_CN) and T_(eDRX_RAN) to the second terminal.
      C. The RRC layer configures T_(eDRX_RAN) for the first terminal, and T_(eDRX_RAN) exceeds 1024 radio frames. C includes C1 and C2:
         C1. The PTW (represented by a CN PTW below) configured by the core network for the first terminal and the PTW (represented by a RAN PTW below) configured by the RAN for the first terminal do not overlap, that is, do not overlap in time domain. The first terminal may send a smallest value in the CN PTW, the DRX cycle, configured by the CN, in the CN PTW, and a default DRX cycle in a SIB message, and a smallest value in the RAN PTW, the DRX cycle, configured by the RAN, in the RAN PTW, and the default DRX cycle in the SIB message to the first terminal UE. The smallest value in the CN PTW, the DRX cycle, configured by the CN, in the CN PTW, and the default DRX cycle in the SIB message is used by the second terminal to determine a cycle in which the CN pages the first terminal, and the smallest value in the RAN PTW, the DRX cycle, configured by the RAN, in the RAN PTW, and the default DRX cycle in the SIB message is used by the second terminal to determine a cycle in which the RAN pages the first terminal.
         C2. Whether the CN PTW overlaps the RAN PTW is not distinguished, that is, whether the CN PTW overlaps the RAN PTW in time domain, as shown in FIG. 6.

In a possible solution, an overlapping part and a non-overlapping part are distinguished.

For the overlapping part, the first terminal sends a smallest value in T_(DRX_CN), T_(DRX_RAN), and the default DRX cycle to the second terminal, so that the second terminal determines a cycle in which the network pages the first terminal in the overlapping part.

For the non-overlapping part, the first terminal chooses to send a smaller value in a DRX cycle in a longer PTW and the default DRX cycle. For example, if the CN PTW is longer than the RAN PTW, the first terminal sends a smaller value in the DRX cycle, configured by the CN, in the CN PTW and the DRX value in the SIB message to the second terminal. If the RAN PTW is longer than the CN PTW, the first terminal sends a smaller value in the DRX cycle, configured by the RAN, in the RAN PTW and the DRX value in the SIB message to the second terminal.

In another possible solution, whether the CN PTW overlaps the RAN PTW is not distinguished. If the CN PTW is longer, the first terminal sends a smaller value in the DRX cycle, configured by the CN, in the CN PTW and the DRX value in the SIB message to the second terminal. If the RAN PTW is longer, the first terminal sends a smaller value in the DRX cycle, configured by the RAN, in the RAN PTW and the DRX value in the SIB message to the second terminal.

In addition, the first terminal device further needs to send the PTW to the second terminal device. Specifically, if the CN PTW is the same as the RAN PTW, the first terminal device may choose to send the CN PTW or the RAN PTW to the second terminal device. Otherwise, the first terminal device sends both the CN PTW and the RAN PTW to the second terminal device.

It may be understood that, in FIG. 6, an example in which the CN PTW is longer than the RAN PTW is used. This is not limited thereto.

It may be understood that the foregoing is merely an example of a possible combination, and there are actually more other combination manners.

For example, the first terminal sends the at least one parameter through a PC5 interface, and the second terminal receives the at least one parameter through the PC5 interface.

For example, the first terminal has a RemoteUEInformationSidelink (RemoteUEInformationSidelink) message that carries the at least one parameter, specifically, the at least one parameter is included in a sl-PagingIdentityRemoteUE information element of the RemoteUEInformationSidelink message.

It may be understood that, in embodiments of this application, the cycle in which the network pages the first terminal is a paging cycle on a terminal side, and is a cycle in which the first terminal and/or the second terminal receive/receives the paging message sent by the network to the first terminal, that is, the first terminal and the second terminal receive the paging message in the cycle. The cycle may be the same as or different from a paging cycle on a network side (that is, an actual cycle in which the network sends the paging message). For example, the paging cycle on the network side and the paging cycle on the terminal side may be in an integer multiple relationship.

It may be understood that if the at least one parameter is different, the second terminal determines the second cycle information in different manners. For example, if the at least one parameter includes a plurality of cycles, the second terminal may determine a minimum cycle in the plurality of cycles as the paging cycle of the first terminal. For example, if the at least one parameter includes only one cycle, the second terminal directly determines the cycle as the paging cycle of the first terminal, or compares the cycle with the default DRX cycle in the SIB, and determine, as the paging cycle of the first terminal, a smaller value in the cycle and the default DRX cycle in the SIB.

Optionally, when an eDRX cycle or a DRX cycle is configured for the second terminal, the second terminal may further determine the second cycle information based on the at least one parameter provided by the first terminal and the eDRX cycle and/or the DRX cycle of the second terminal. For example, the at least one parameter includes at least one cycle (for example, the eDRX cycle and/or the DRX cycle of the first terminal). The second terminal compares the at least one cycle with the eDRX cycle and/or the DRX cycle of the second terminal, and determines a smallest cycle as the paging cycle of the first terminal and the second terminal. Therefore, it is ensured that the second terminal can not only receive the paging message of the first terminal, but also receive the paging message of the second terminal.

Certainly, the foregoing is merely an example, and an actual manner in which the second terminal determines the second cycle information is not limited thereto.

Optionally, after step S503 (that is, after the second terminal determines the second cycle information), the method may further include steps S504 and S505.

S504: The network device (for example, the network device 103 in FIG. 1) sends a paging message corresponding to the first terminal in the paging cycle of the first terminal, and the second terminal receives the paging message from the network (the access network and/or the core network) in the paging cycle of the first terminal.

S505: The second terminal sends the paging message to the first terminal.

In the foregoing solutions, when the first terminal supports an eDRX mechanism, the first terminal may determine, based on information (for example, an eDRX cycle and a PTW) related to the eDRX mechanism, the at least one parameter to be sent to the second terminal, so that the paging cycle determined by the second terminal based on the at least one parameter can adapt to the eDRX mechanism of the first terminal. This can improve reliability of a relay function, and reduce power consumption of the terminal.

In a possible implementation, before sending the at least one parameter (that is, S502), the first terminal may first determine whether capability information of the second terminal and capability information of a serving cell of the first terminal meet a preset condition. When the capability information of the second terminal and the capability information of the serving cell of the first terminal meet the preset condition, the first terminal sends the at least one parameter to the second terminal. If the capability information of the second terminal and the capability information of the serving cell of the first terminal do not meet the preset condition, the first terminal may not send the at least one parameter to the second terminal. Alternatively, before determining the at least one parameter (that is, S501), the first terminal may first determine whether the capability information of the second terminal and the capability information of the serving cell of the first terminal meet the preset condition. When the capability information of the second terminal and the capability information of the serving cell of the first terminal meet the preset condition, the parameter to be sent to the second terminal is determined based on the method in S501. If the capability information of the second terminal and the capability information of the serving cell of the first terminal do not meet the preset condition, the first terminal determines, based on another method (for example, the method in which the remote terminal sends, to the relay terminal, the information related to the paging cycle that is described before the embodiment in FIG. 5) instead of the method in S501, the parameter to be sent to the second terminal.

The capability information of the second terminal indicates that the second terminal supports or does not support the eDRX mechanism, the capability information of the serving cell indicates that the serving cell supports or does not support the eDRX mechanism, and the preset condition may include that the second terminal supports the eDRX mechanism and the serving cell supports the eDRX mechanism.

Based on the foregoing descriptions, when the relay terminal provides a service of connecting to the network for the remote terminal, a serving cell of the relay terminal may also be considered as a serving cell of the remote terminal. In embodiments of this application, the second terminal provides the relay service for the first terminal. Therefore, the serving cell of the first terminal herein may also be considered as a serving cell of the second terminal.

It may be understood that the first terminal can run the eDRX mechanism only when the first terminal, the second terminal, and the serving cell of the first terminal all support the eDRX mechanism. If the serving cell of the second terminal and/or the serving cell of the first terminal do/does not support the eDRX mechanism, the first terminal cannot run the eDRX mechanism. Therefore, when the capability information of the second terminal and the capability information of the serving cell of the first terminal meet the preset condition, the second terminal can determine the paging cycle based on the at least one parameter.

Further, in an actual case, for the terminal in different RRC modes, the capability information of serving cell may be different. Therefore, that the serving cell supports the eDRX mechanism may specifically include: When the RRC mode of the first terminal is the RRC idle mode and/or the RRC inactive mode, the serving cell supports the eDRX mechanism. Correspondingly, when the serving cell supports the eDRX mechanism, the first terminal sends the at least one parameter. For example, if the serving cell supports the eDRX mechanism when the RRC mode of the first terminal is the RRC idle mode, the first terminal sends the at least one parameter when the first terminal is in the RRC idle mode. If the serving cell supports the eDRX mechanism when the RRC mode of the first terminal is the RRC inactive mode, the first terminal sends the at least one parameter when the first terminal is in the RRC inactive mode.

It may be understood that, before determining whether the capability information of the second terminal and the capability information of the serving cell of the first terminal meet the preset condition, the first terminal needs to first obtain the capability information of the second terminal and the capability information of the serving cell of the first terminal.

In a possible example, the second terminal may send the capability information of the second terminal to the first terminal. For example, the second terminal may send the capability information of the second terminal to the first terminal when establishing a unicast connection to the first terminal. Alternatively, for example, the first terminal sends a request (the request is used to query the capability information of the second terminal) to the second terminal. After receiving the request, the second terminal sends the capability information of the second terminal to the first terminal.

In another possible example, the network device has a SIB1 message that carries the capability information of the serving cell. After receiving the SIB1 message, the second terminal sends the SIB1 message to the first terminal. After receiving the SIB1 message, the first terminal determines the capability information of the serving cell from the SIB message. For example, the SIB1 message includes two fields: eDRX-AllowedIdle-r17 and eDRX-AllowedInactive-r17, the eDRX-AllowedIdle-r17 field indicates that the serving cell supports or does not support the eDRX mechanism when the first terminal is in the RRC idle mode, the eDRX-AllowedInactive-r17 field indicates that the serving cell supports or does not support the eDRX mechanism when the first terminal is in the RRC inactive mode.

In the foregoing implementation, the first terminal determines, based on the capability information of the second terminal and the capability information of the serving cell of the first terminal, whether to provide the information related to the eDRX mechanism of the first terminal for the second terminal, to reduce a waste of transmission resources, and further reduce power consumption of the terminal.

In a possible implementation, when the capability information of the second terminal and the capability information of the serving cell of the first terminal meet the preset condition, the second terminal may send sixth indication information to the second terminal. The sixth indication information indicates the first terminal to send the at least one parameter (that is, provide the information related to the eDRX mechanism of the first terminal for the second terminal), or the sixth indication information indicates that the second terminal is capable of receiving, for the first terminal, the paging message sent by the network to the first terminal. After receiving the sixth indication information, the first terminal sends the at least one parameter to the second terminal. Alternatively, when the capability information of the second terminal and the capability information of the serving cell of the first terminal meet the preset condition, the second terminal may send sixth indication information to the second terminal. The sixth indication information indicates the first terminal to determine, according to the method in S501, the parameter to be sent to the second terminal. After receiving the sixth indication information, the first terminal determines, according to the method in S501, the parameter to be sent to the second terminal.

For the capability information of the second terminal, the capability information of the serving cell, the preset condition, and the like, refer to the foregoing descriptions. Details are not described herein again.

When the capability information of the second terminal and the capability information of the serving cell of the first terminal do not meet the preset condition or the second terminal cannot receive, for the first terminal, the paging message sent by the network to the first terminal, the first terminal may not send the sixth indication information. When the first terminal does not receive the sixth indication information, the first terminal does not send the at least one parameter to the second terminal, or does not determine, according to the method in S501, the parameter provided for the second terminal. Alternatively, when the capability information of the second terminal and the capability information of the serving cell of the first terminal do not meet the preset condition, the first terminal may not send the sixth indication information, but send seventh indication information. The seventh indication information indicates the first terminal not to send the at least one parameter, or indicates the first terminal not to determine, according to the method in S501, the parameter provided for the second terminal, or indicates that the second terminal cannot receive, for the first terminal, the paging message sent by the network to the first terminal. Based on the seventh indication information, the first terminal determines not to send the at least one parameter to the second terminal, or does not determine, according to the method in S501, the parameter provided for the second terminal.

In this implementation, a waste of transmission resources can be reduced, and power consumption of the terminal can be further reduced. In addition, implementation complexity on the first terminal side can be further reduced.

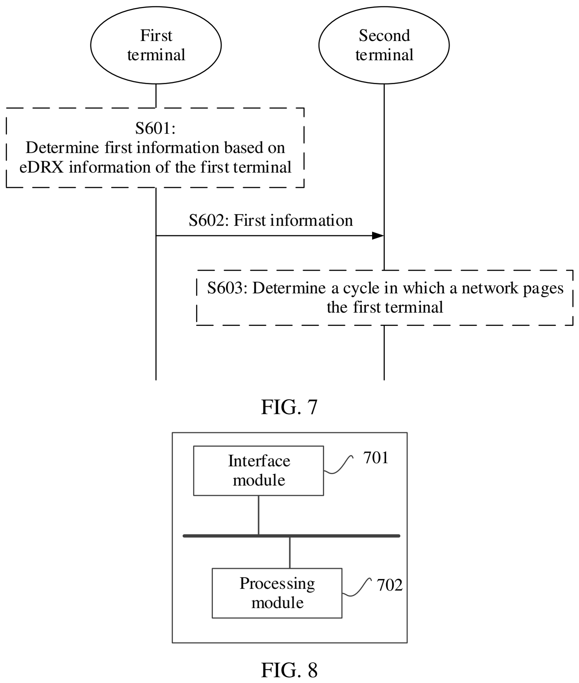

FIG. 7 is a flowchart of another communication method according to an embodiment of this application. An example in which the method is applied to the scenario shown in FIG. 1 is used. The method includes S601 to S603.

S602: A first terminal sends first information, where the first information includes at least one parameter. Correspondingly, a second terminal receives the first information from the first terminal.

The second terminal provides a relay service for the first terminal, first cycle information is configured for the first terminal, and the first cycle information indicates an eDRX cycle. For specific implementations of the first terminal, the second terminal, the first cycle information, and the like, refer to related descriptions in S501. Details are not described herein again.

The at least one parameter is related to eDRX information of the first terminal. For example, the at least one parameter is determined based on the eDRX information of the first terminal.

Optionally, the first information further includes a paging identifier, and the paging identifier indicates that a network pages the first terminal.

Optionally, the method further includes S601: The first terminal determines the first information based on the eDRX information of the first terminal, where the first information includes the at least one parameter. Optionally, S601 is performed before S602.

Optionally, the method further includes S603: The second terminal determines a cycle in which the network pages the first terminal. For example, the second terminal determines second cycle information based on the first information, and determines, based on the second cycle information, the cycle in which the network pages the first terminal. Optionally, S603 is performed after S602.

In FIG. 7, optional steps are identified by dashed lines.

In this method, the second terminal and/or a serving cell of the first terminal (or a serving cell of the second terminal) do/does not support an eDRX mechanism. Alternatively, the first terminal cannot determine whether the second terminal and/or a serving cell of the first terminal (or a serving cell of the second terminal) support/supports an eDRX mechanism, for example, the first terminal does not obtain capability information of the second terminal and/or capability information of the serving cell of the first terminal (or the serving cell of the second terminal).

That the second terminal and/or the serving cell of the second terminal do/does not support the eDRX mechanism includes the following several cases:
1. The second terminal does not support the eDRX mechanism, and the serving cell of the second terminal supports the eDRX mechanism.
2. The second terminal does not support the eDRX mechanism, and the serving cell of the second terminal does not support the eDRX mechanism.
3. The second terminal supports the eDRX mechanism, and the serving cell of the second terminal does not support the eDRX mechanism.

That the serving cell of the second terminal supports the eDRX mechanism includes: When an RRC mode of the second terminal is an RRC idle mode and/or an RRC inactive mode, the serving cell of the second terminal supports the eDRX mechanism.

In embodiments of this application, the second terminal provides the relay service for the first terminal. Therefore, the serving cell of the second terminal may also be considered as the serving cell of the first terminal.

For specific implementations of S602 and S603, refer to the specific implementations of S502 and S503. Details are not described herein again.

In the foregoing solution, when the second terminal and/or the serving cell of the first terminal (or the serving cell of the second terminal) does not support the eDRX mechanism, a parameter provided by the first terminal for the second terminal is related to the eDRX information of the first terminal, so that the relay service provided by the second terminal for the first terminal can adapt to the eDRX mechanism of the first terminal. This improves reliability of a relay function, and reduces power consumption of the terminal.

In a possible design, the eDRX information of the first terminal indicates an eDRX cycle of the first terminal. The determining the first information based on the eDRX information of the first terminal includes: determining the at least one parameter based on the eDRX information of the first terminal and reference information. The reference information includes at least one of the following: threshold information, a first value range, a second value range, and RRC mode information. The threshold information includes a first threshold and/or a second threshold. The first value range is a value range of an eDRX cycle. The second value range is a value range of a DRX cycle. The RRC mode information indicates an RRC mode of the first terminal.

Optionally, the first threshold is a maximum value in the first value range, and the second threshold is a maximum value in the second value range.

For example, the first value range is {rf256, rf512, rf1024}, where rf256, rf512, and rf1024 respectively indicate 256 radio frames, 512 radio frames, and 1024 radio frames, and the second value range is {rf32, rf64, rf128, rf256}, where rf32, rf64, rf128, and rf256 respectively indicate 32 radio frames, 64 radio frames, 128 radio frames, and 256 radio frames. The second threshold is rf256, and the first threshold is rf1024.

In a possible design, the determining the at least one parameter based on the eDRX information of the first terminal and the reference information includes: determining the at least one parameter based on a value relationship between the eDRX cycle indicated by the eDRX information of the first terminal and the threshold indicated by the threshold information.

For example, the determining the at least one parameter based on the value relationship between the eDRX cycle indicated by the eDRX information of the first terminal and the threshold indicated by the threshold information includes:
(1) if the eDRX cycle of the first terminal is less than or equal to the second threshold, determining that the at least one parameter includes the eDRX cycle of the first terminal; or
(2) if the eDRX cycle of the first terminal exceeds the second threshold and is less than or equal to the first threshold, determining the at least one parameter based on an intersection of the first value range and the second value range; or
(3) if the eDRX cycle of the first terminal exceeds the first threshold, determining that the at least one parameter includes the DRX cycle of the first terminal.

In a possible design, the determining the at least one parameter based on the intersection of the first value range and the second value range includes: if the intersection of the first value range and the second value range includes only one value, determining that the at least one parameter includes the value; or if the intersection of the first value range and the second value range includes a plurality of values, determining that the at least one parameter includes a maximum value in the plurality of values.

In a possible design, the determining the at least one parameter based on the intersection of the first value range and the second value range includes:
if the intersection of the first value range and the second value range includes only one value, determining that the at least one parameter includes the value or the maximum value in the second value range, for example, the first value range is {rf256, rf512, rf1024}, the second value range is {rf32, rf64, rf128, rf256}, and the intersection includes only one value rf256, in this case, determining that the at least one parameter includes the maximum value rf256 in the second value range (namely, the value in the intersection); or
if the intersection of the first value range and the second value range is an empty set, determining that the at least one parameter includes the maximum value in the second value range; or
if the intersection of the first value range and the second value range includes a plurality of values, determining that the at least one parameter includes a maximum value in the plurality of values.

In a possible design, the eDRX cycle of the first terminal includes an eDRX cycle configured by an upper layer for the first terminal and/or an eDRX cycle configured by an RRC layer for the first terminal. The method further includes: if the eDRX information of the first terminal includes the eDRX cycle configured by the upper layer for the first terminal and the eDRX cycle configured by the RRC layer for the first terminal, determining that the eDRX information of the first terminal indicates a smaller value in the eDRX cycle configured by the upper layer for the first terminal and the eDRX cycle configured by the RRC layer for the first terminal; or if the eDRX information of the first terminal includes either the eDRX cycle configured by the upper layer for the first terminal or the eDRX cycle configured by the RRC layer for the first terminal, determining that the eDRX information of the first terminal indicates the eDRX cycle.

In a possible design, the eDRX cycle of the first terminal includes the eDRX cycle configured by the upper layer for the first terminal and/or the eDRX cycle configured by the RRC layer for the first terminal. The determining the at least one parameter based on the eDRX information of the first terminal and the reference information includes: if the RRC mode is an RRC idle mode, determining the at least one parameter based on the eDRX cycle configured by the upper layer for the first terminal; or if the RRC mode is an RRC inactive mode, determining the at least one parameter based on the eDRX cycle configured by the upper layer and/or the eDRX cycle configured by the RRC layer for the first terminal.

It may be understood that the foregoing several designs may be implemented separately, or may be implemented in combination with each other.

The following provides an example of a combination.

The first terminal is in the RRC idle mode or the RRC inactive mode, and the eDRX cycle is configured for the first terminal. The first terminal may determine, based on different cases, the parameter to be sent to the second terminal. Details are as follows:
1. When the first terminal is in the RRC idle mode, only a core network initiates paging. The upper layer configures the eDRX cycle (represented by T_(eDRX_CN)) for the first terminal, and T_(eDRX_CN) does not exceed 1024 frames:
   (1) if T_(eDRX_CN) is greater than or equal to 256 frames, the at least one parameter includes a maximum value in an intersection of a value range of a DRX cycle and a value range of the eDRX cycle.
      For example, the value range of the eDRX cycle is {rf256, rf512, rf1024}, and the value range of the DRX cycle is {rf32, rf64, rf128, rf256}.
   (2) If T_(eDRX_CN) is less than 256 frames, the at least one parameter includes T_(eDRX_CN).
2. When the first terminal is in the RRC inactive mode, both the core network and an access network initiate paging, and the eDRX cycle of the first terminal may include the eDRX cycle (represented by T_(eDRX_CN)) configured by the upper layer and/or the eDRX cycle configured by the RRC layer (represented by T_(eDRX_RAN)):
   (1) T_(eDRX_CN) and T_(eDRX_RAN) do not exceed 1024 frames:
      A. A smaller value in T_(eDRX_CN) and T_(eDRX_RAN) is greater than or equal to 256 frames, and the at least one parameter includes a maximum value in an overlapping part of the value range of the DRX cycle and the value range of the eDRX cycle.
      B. The smaller value in T_ (eDRX_CN) and T_(eDRX_RAN) is less than 256 frames, and the at least one parameter includes min{T_(eDRX_CN), T_(eDRX_RAN)}.
   (2) T_(eDRX_CN) does not exceed 1024 frames and T_(eDRX_RAN) is not configured:
      the at least one parameter includes a smaller value (or a DRX cycle configured by the RRC layer) in the DRX cycle configured by the RRC layer and T_(eDRX_CN). Optionally, if T_(eDRX_CN) is less than a DRX cycle configured by the upper layer, the at least one parameter includes T_(eDRX_CN).
   (3) T_(eDRX_CN) exceeds 1024 frames and T_(eDRX_RAN) does not exceed 1024 frames:
      the at least one parameter includes a smaller value (or the DRX cycle configured by the upper layer) in the DRX cycle configured by the upper layer and T_(eDRX_RAN). Optionally, if the DRX cycle configured by the upper layer is less than the DRX cycle configured by the upper layer, the at least one parameter includes T_(eDRX_RAN).
   (4) T_(eDRX_CN) exceeds 1024 frames and T_(eDRX_RAN) exceeds 1024 frames:
      the first terminal provides the parameter for the second terminal based on the case in which only the remote terminal supports the DRX mechanism as described above.

It may be understood that the foregoing is merely an example of a possible combination, and there are actually more other combination manners.

It may be understood that the methods described in FIG. 5 to FIG. 7 are all applicable to a scenario in which the eDRX cycle is configured for the first terminal. If the eDRX cycle is not configured for the first terminal, the first terminal may determine, based on another method (for example, the method in which the remote terminal sends, to the relay terminal, the information related to the paging cycle in the embodiment in FIG. 5), the parameter to be sent to the second terminal.

The methods provided in embodiments of this application are described above with reference to the accompanying drawings. The following describes apparatuses provided in embodiments of this application with reference to the accompanying drawings.

Based on a same technical concept, an embodiment of this application provides a communication apparatus. The apparatus includes modules/units/means configured to perform the methods performed by the first terminal or the first terminal in the foregoing method embodiments. The modules/units/means may be implemented by software, hardware, or hardware by executing corresponding software.

For example, as shown in FIG. 8, the apparatus may include an interface module 701 and a processing module 702.

For example, when the apparatus is the first terminal or is located in the first terminal, the processing module 702 is configured to determine first information, where the first information includes at least one parameter. The interface module 701 is configured to send the first information to a second terminal. First cycle information is configured for the first terminal, the first cycle information indicates an eDRX cycle of the first terminal, the at least one parameter is used to determine second cycle information, the second cycle information is used to determine a cycle in which a network pages the first terminal, the at least one parameter is related to second information, and the second information includes at least one of the following: partial information or all information in the first cycle information, and a PTW of the first terminal.

Alternatively, the processing module 702 is configured to determine first information based on eDRX information of a first terminal, where the first information includes at least one parameter. The interface module 701 is configured to send the first information to a second terminal, where the at least one parameter is used to determine second cycle information, and the second cycle information is used to determine a cycle in which a network pages the first terminal.

For example, when the apparatus is the second terminal or is located in the second terminal, the interface module 701 is configured to: receive first information, where the first information includes at least one parameter, first cycle information is configured for a first terminal, the first cycle information indicates an eDRX cycle of the first terminal, the at least one parameter is related to second information, and the second information includes at least one of the following: partial information or all information in the first cycle information, and a PTW of the first terminal; and determine second cycle information based on the first information. The processing module 702 is configured to determine, based on the second cycle information, a cycle in which a network pages the first terminal.

Alternatively, the interface module 701 is configured to receive first information, where the first information is determined based on eDRX information of a first terminal, and the first information includes at least one parameter. The processing module 702 is configured to determine second cycle information based on the first information, and determine, based on the second cycle information, a cycle in which a network pages the first terminal.

It should be understood that all related content of the steps in the foregoing method embodiments may be cited in function descriptions of the corresponding functional modules. Details are not described herein.

During specific implementation, the apparatus may have a plurality of product forms. The following describes several possible product forms.

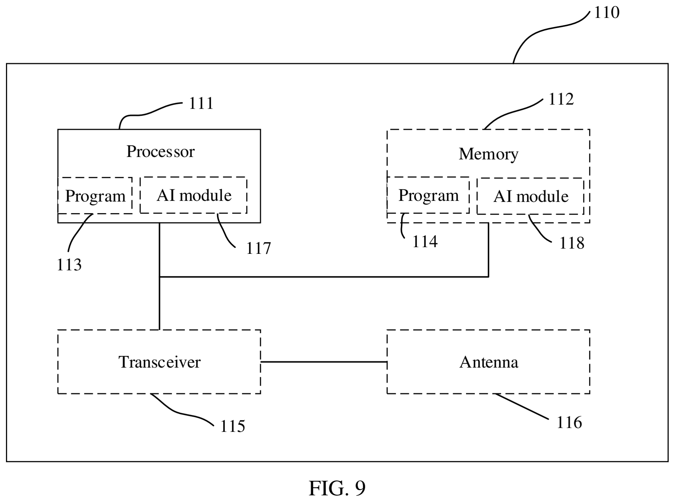

Refer to FIG. 9. An embodiment of this application further provides a communication apparatus 110. It may be understood that the communication apparatus 110 includes technical means (means) of necessary forms, for example, modules, units, elements, circuits, or interfaces, which are appropriately configured together to implement the solution. The communication apparatus 110 may be the terminal device 101, the terminal device 102, or the network device 103 in FIG. 1, or may be a component (for example, a chip) in these devices, and is configured to implement the method performed by the first terminal, the second terminal, or the network device in the foregoing method embodiments.

The communication apparatus 110 includes one or more processors 111. The processor 111 may be a general-purpose processor, a dedicated processor, or the like. For example, the processor 111 may be a baseband processor or a central processing unit. The baseband processor may be configured to process a communication protocol and communication data. The central processing unit may be configured to: control the communication apparatus (for example, a RAN node, a terminal, or a chip), execute a software program, and process data of the software program.

Optionally, in a design, the processor 111 may include a program 113 (which may also be referred to as code or instructions sometimes). The program 113 may be run on the processor 111, so that the communication apparatus 110 performs the method performed by the first terminal, the second terminal, or the network device in the foregoing method embodiments.

In another possible design, the communication apparatus 110 includes a circuit (not shown in FIG. 9). The circuit is configured to implement a function of the method performed by the first terminal, the second terminal, or the network device in the foregoing method embodiments.

Optionally, the communication apparatus 110 may include one or more memories 112 storing a program 114 (which may also be referred to as code or instructions sometimes). The program 114 may be run on the processor 111, so that the communication apparatus 110 performs the method performed by the first terminal, the second terminal, or the network device in the foregoing method embodiments.

Optionally, the processor 111 and/or the memory 112 may include AI modules 117 and 118, and the AI module is configured to implement an AI-related function. The AI module may be implemented by using software, hardware, or a combination of the software and the hardware. For example, the AI module may include an RIC module. For example, the AI module may be a near-real-time RIC or a non-real-time RIC.

Optionally, the processor 111 and/or the memory 112 may further store data. The processor and the memory may be separately disposed, or may be integrated together.

Optionally, the communication apparatus 110 may further include a transceiver 115 and/or an antenna 116. The processor 111 may also be sometimes referred to as a processing unit, and controls the communication apparatus (for example, the RAN node or the terminal). The transceiver 115 may also be sometimes referred to as a transceiver unit, a transceiver machine, a transceiver circuit, a transceiver, or the like, and is configured to implement a transceiver function of the communication apparatus through the antenna 116.

It should be understood that the processor mentioned in this embodiment of this application may be implemented by hardware or by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor or the like.

It should be understood that the memory mentioned in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (Random Access Memory, RAM), used as an external cache. By way of example rather than limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be noted that the memory described in this specification aims to include but is not limited to these memories and any memory of another proper type.

Based on a same technical concept, an embodiment of this application further provides a computer-readable storage medium, including a program or instructions. When the program or the instructions are run on a computer, the method performed by the first terminal or the second terminal is performed.

Based on a same technical concept, an embodiment of this application further provides a computer program product including instructions. The computer program product stores the instructions, and when the computer program product runs on a computer, the method performed by the first terminal or the second terminal is performed.

Based on a same technical concept, an embodiment of this application further provides a chip. The chip may include a processor, and may further include a memory (or the chip is coupled to the memory). The chip executes program instructions in the memory, to perform the method performed by the first terminal, the second terminal, or the network device in the foregoing method embodiments. "Coupling" means that two components are directly or indirectly combined with each other. For example, coupling may mean an electrical connection between the two components.

Based on a same technical concept, an embodiment of this application further provides a communication system. For example, the communication system may include the first terminal and the second terminal in the foregoing. Optionally, the communication system may further include a network device.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and the scope of this application. If these modifications and variations made to this application fall within the scope of the claims of this application and equivalent technologies thereof, this application is also intended to cover these modifications and variations.

## Claims

1. A communication method, applied to a first terminal, wherein a second terminal provides a relay service for the first terminal, and the method comprises:
determining first information, wherein the first information comprises at least one parameter; and
sending the first information to the second terminal, wherein
first cycle information is configured for the first terminal, the first cycle information indicates an extended discontinuous reception cycle of the first terminal, the at least one parameter is used to determine second cycle information, the second cycle information is used to determine a cycle in which a network pages the first terminal, the at least one parameter is related to second information, and the second information comprises at least one of the following: partial information or all information in the first cycle information, and a paging time window of the first terminal.

2. The method according to claim 1, wherein the determining the first information comprises:
determining the first information based on at least one of threshold information, extended discontinuous reception information, discontinuous reception DRX information, paging time window information, and radio resource control RRC mode information, wherein
the threshold information indicates a first threshold, and the first threshold is a maximum value in a value range of an extended discontinuous reception cycle;
the extended discontinuous reception cycle information indicates the extended discontinuous reception cycle of the first terminal;
the DRX information indicates a DRX cycle of the first terminal;
the paging time window information indicates the paging time window of the first terminal; and
the RRC mode information indicates an RRC mode of the first terminal.

3. The method according to claim 2, wherein determining the first information based on at least one of the threshold information, the extended discontinuous reception information, the discontinuous reception DRX information, the paging time window information, and the radio resource control RRC mode information comprises:
determining the at least one parameter in the first information based on the threshold information and the extended discontinuous reception information.

4. The method according to claim 3, wherein the determining the at least one parameter in the first information based on the threshold information and the extended discontinuous reception information comprises:
determining the at least one parameter based on a value relationship between the first threshold and the extended discontinuous reception cycle of the first terminal.

5. The method according to claim 4, wherein the extended discontinuous reception cycle of the first terminal comprises an extended discontinuous reception cycle configured by an upper layer and/or an extended discontinuous reception cycle configured by an RRC layer for the first terminal; and
determining the at least one parameter based on the value relationship between the first threshold and the extended discontinuous reception cycle of the first terminal comprises:
if any extended discontinuous reception cycle of the first terminal is less than or equal to the first threshold, determining the at least one parameter based on the any extended discontinuous reception cycle, wherein the second information comprises the any extended discontinuous reception cycle; and
if at least one extended discontinuous reception cycle of the first terminal exceeds the first threshold, determining the at least one parameter based on the DRX cycle of the first terminal and/or a default DRX cycle, wherein the second information comprises the paging time window of the first terminal, and further comprises the DRX cycle of the first terminal or the default DRX cycle.

6. The method according to any one of claims 2 to 5, wherein the determining the first information based on at least one of the threshold information, the extended discontinuous reception information, the discontinuous reception DRX information, the paging time window information, and the radio resource control RRC mode information comprises:
determining the at least one parameter in the first information based on the extended discontinuous reception information and the DRX information.

7. The method according to claim 6, wherein the extended discontinuous reception cycle of the first terminal comprises the extended discontinuous reception cycle configured by the upper layer and/or the extended discontinuous reception cycle configured by the RRC layer for the first terminal, and the DRX cycle configured for the first terminal comprises a DRX cycle configured by the upper layer and/or a DRX cycle configured by the RRC layer for the first terminal; and
the determining the at least one parameter in the first information based on the extended discontinuous reception information and the DRX information comprises:
if the upper layer does not configure the extended discontinuous reception cycle for the first terminal, determining the at least one parameter based on the DRX cycle configured by the upper layer for the first terminal and/or the default DRX cycle, wherein the second information comprises a paging time window configured by the upper layer for the first terminal, and further comprises the DRX cycle configured by the upper layer for the first terminal and/or the default DRX cycle; and/or
if the RRC layer does not configure the extended discontinuous reception cycle for the first terminal, determining the at least one parameter based on the DRX cycle configured by the RRC layer for the first terminal and/or the default DRX cycle, wherein the second information comprises a paging time window configured by the RRC layer for the first terminal, and further comprises the DRX cycle configured by the RRC layer for the first terminal and/or the default DRX cycle.

8. The method according to any one of claims 2 to 7, wherein the determining the first information based on at least one of the threshold information, the extended discontinuous reception information, the discontinuous reception DRX information, the paging time window information, and the radio resource control RRC mode information comprises:
determining the at least one parameter in the first information based on the paging time window information.

9. The method according to claim 8, wherein the paging time window of the first terminal comprises the paging time windows configured by the upper layer and the RRC layer for the first terminal; and
the determining the at least one parameter in the first information based on the paging time window information comprises:
determining the at least one parameter based on a value relationship between the paging time window configured by the upper layer for the first terminal and the paging time window configured by the RRC layer for the first terminal; and/or
determining the at least one parameter based on an overlapping mode between the paging time window configured by the upper layer for the first terminal and the paging time window configured by the RRC layer for the first terminal.

10. The method according to claim 9, wherein the determining the at least one parameter based on the value relationship between the paging time window configured by the upper layer for the first terminal and the paging time window configured by the RRC layer for the first terminal comprises:
if the paging time window configured by the upper layer for the first terminal is greater than the paging time window configured by the RRC layer for the first terminal, determining the at least one parameter based on the DRX cycle configured by the upper layer for the first terminal and/or the default DRX cycle, wherein the second information comprises the paging time window configured by the upper layer for the first terminal, and further comprises the DRX cycle configured by the upper layer for the first terminal and/or the default DRX cycle; or
if the paging time window configured by the upper layer for the first terminal is less than the paging time window configured by the RRC layer for the first terminal, determining the at least one parameter based on the DRX cycle configured by the RRC layer for the first terminal and/or the default DRX cycle, wherein the second information comprises the paging time window configured by the RRC layer for the first terminal, and further comprises the DRX cycle configured by the RRC layer for the first terminal and/or the default DRX cycle.

11. The method according to claim 9, wherein the determining the at least one parameter based on the overlapping mode between the paging time window configured by the upper layer for the first terminal and the paging time window configured by the RRC layer for the first terminal comprises:
if the paging time window configured by the upper layer for the first terminal does not overlap the paging time window configured by the RRC layer for the first terminal, determining the at least one parameter based on the DRX cycles configured by the upper layer and the RRC layer for the first terminal and/or the default DRX cycle, wherein the second information comprises the paging time windows configured by the upper layer and the RRC layer for the first terminal, and further comprises the DRX cycles configured by the upper layer and the RRC layer for the first terminal and/or the default DRX cycle; or
if there is an overlapping part and a non-overlapping part between the paging time window configured by the upper layer for the first terminal and the paging time window configured by the RRC layer for the first terminal, for the overlapping part, determining the at least one parameter based on the DRX cycle configured by the upper layer for the first terminal, the DRX cycle configured by the RRC layer for the first terminal, and the default DRX cycle, wherein the second information comprises the paging time windows configured by the upper layer and the RRC layer for the first terminal, and further comprises the DRX cycle configured by the upper layer for the first terminal, the DRX cycle configured by the RRC layer for the first terminal, and the default DRX cycle; and for the non-overlapping part, determining the at least one parameter based on the default DRX cycle and a DRX cycle in a larger paging time window in the paging time window configured by the upper layer for the first terminal and the paging time window configured by the RRC layer for the first terminal, wherein the second information comprises the larger paging time window, the DRX cycle in the larger paging time window, and the default DRX cycle.

12. The method according to any one of claims 2 to 11, wherein the determining the first information based on at least one of the threshold information, the extended discontinuous reception information, the discontinuous reception DRX information, the paging time window information, and the radio resource control RRC mode information comprises:
if the RRC mode is an RRC idle mode, determining the at least one parameter based on the extended discontinuous reception cycle configured by the upper layer for the first terminal; or
if the RRC mode is an RRC inactive mode, determining the at least one parameter based on the extended discontinuous reception cycle configured by the upper layer and/or the extended discontinuous reception cycle configured by the RRC layer for the first terminal.

13. The method according to any one of claims 1 to 12, wherein that the at least one parameter is related to the second information comprises:
the at least one parameter comprises partial information or all information in the second information; and/or
the at least one parameter comprises a statistical value of the partial information or all the information in the second information.

14. The method according to claim 13, wherein the statistical value of the partial information or all the information in the second information is a minimum value of the partial information or all the information in the second information.

15. The method according to any one of claims 1 to 14, wherein the sending the first information to the second terminal comprises:
when capability information of the second terminal and capability information of a serving cell of the second terminal meet a preset condition, sending the first information to the second terminal, wherein
the capability information of the second terminal indicates that the second terminal supports or does not support an extended discontinuous reception mechanism, the capability information of the serving cell indicates that the serving cell supports or does not support the extended discontinuous reception mechanism, and the preset condition comprises that the second terminal supports the extended discontinuous reception mechanism and the serving cell supports the extended discontinuous reception mechanism.

16. The method according to claim 15, further comprising:
obtaining the capability information of the second terminal and/or the capability information of the serving cell of the second terminal from the second terminal.

17. The method according to claim 15 or 16, wherein that the serving cell supports the extended discontinuous reception mechanism comprises: when the RRC mode of the first terminal is the RRC idle mode and/or the RRC inactive mode, the serving cell supports the extended discontinuous reception mechanism; and
the sending the first information to the second terminal comprises: when the serving cell supports the extended discontinuous reception mechanism, sending the first information.

18. The method according to any one of claims 1 to 16, wherein the method further comprises:
determining that the second terminal is capable of receiving, for the first terminal, a paging message sent by the network to the second terminal, and sending the first information to the second terminal.

19. The method according to claim 18, further comprising:
receiving sixth indication information from the second terminal, wherein the sixth indication information indicates that the second terminal is capable of receiving, for the first terminal, the paging message sent by the network to the first terminal.

20. A communication method, applied to a first terminal, wherein a second terminal provides a relay service for the first terminal, the second terminal does not support an extended discontinuous reception mechanism, and the method comprises:
determining first information based on extended discontinuous reception information of the first terminal, wherein the first information comprises at least one parameter; and
sending the first information to the second terminal, wherein
the at least one parameter is used to determine second cycle information, and the second cycle information is used to determine a cycle in which a network pages the first terminal.

21. The method according to claim 20, wherein the extended discontinuous reception information of the first terminal indicates an extended discontinuous reception cycle of the first terminal; and
the determining the first information based on the extended discontinuous reception information of the first terminal comprises:
determining the at least one parameter based on the extended discontinuous reception information of the first terminal and reference information, wherein the reference information comprises at least one of the following: threshold information, a first value range, a second value range, and RRC mode information, wherein
the threshold information comprises a first threshold and/or a second threshold;
the first value range is a value range of an extended discontinuous reception cycle;
the second value range is a value range of a DRX cycle; and
the RRC mode information indicates an RRC mode of the first terminal.

22. The method according to claim 21, wherein the determining the at least one parameter based on the extended discontinuous reception information of the first terminal and the reference information comprises:
determining the at least one parameter based on a value relationship between the extended discontinuous reception cycle indicated by the extended discontinuous reception information of the first terminal and the threshold indicated by the threshold information.

23. The method according to claim 22, wherein the first threshold is a maximum value in the first value range, and the second threshold is a maximum value in the second value range; and
the determining the at least one parameter based on the value relationship between the extended discontinuous reception cycle indicated by the extended discontinuous reception information of the first terminal and the threshold indicated by the threshold information comprises:
if the extended discontinuous reception cycle of the first terminal is less than or equal to the second threshold, determining that the at least one parameter comprises the extended discontinuous reception cycle of the first terminal; or
if the extended discontinuous reception cycle of the first terminal exceeds the second threshold and is less than or equal to the first threshold, determining the at least one parameter based on an intersection of the first value range and the second value range; or
if the extended discontinuous reception cycle of the first terminal exceeds the first threshold, determining that the at least one parameter comprises a DRX cycle of the first terminal.

24. The method according to claim 23, wherein the determining the at least one parameter based on the intersection of the first value range and the second value range comprises:
if the intersection of the first value range and the second value range comprises only one value, determining that the at least one parameter comprises the maximum value in the second value range; or
if the intersection of the first value range and the second value range comprises a plurality of values, determining that the at least one parameter comprises a maximum value in the plurality of values.

25. The method according to any one of claims 21 to 24, wherein the extended discontinuous reception cycle of the first terminal comprises an extended discontinuous reception cycle configured by an upper layer for the first terminal and/or an extended discontinuous reception cycle configured by an RRC layer for the first terminal; and
the method further comprises:
if the extended discontinuous reception information of the first terminal comprises the extended discontinuous reception cycle configured by the upper layer for the first terminal and the extended discontinuous reception cycle configured by the RRC layer for the first terminal, determining that the extended discontinuous reception information of the first terminal indicates a smaller value in the extended discontinuous reception cycle configured by the upper layer for the first terminal and the extended discontinuous reception cycle configured by the RRC layer for the first terminal; or
if the extended discontinuous reception information of the first terminal comprises either the extended discontinuous reception cycle configured by the upper layer for the first terminal or the extended discontinuous reception cycle configured by the RRC layer for the first terminal, determining that the extended discontinuous reception information of the first terminal indicates the extended discontinuous reception cycle.

26. The method according to any one of claims 21 to 25, wherein the extended discontinuous reception cycle of the first terminal comprises the extended discontinuous reception cycle configured by the upper layer for the first terminal and/or the extended discontinuous reception cycle configured by the RRC layer for the first terminal; and
the determining the at least one parameter based on the extended discontinuous reception information of the first terminal and the reference information comprises:
if the RRC mode is an RRC idle mode, determining the at least one parameter based on the extended discontinuous reception cycle configured by the upper layer for the first terminal; or
if the RRC mode is an RRC inactive mode, determining the at least one parameter based on the extended discontinuous reception cycle configured by the upper layer and/or the extended discontinuous reception cycle configured by the RRC layer for the first terminal.

27. The method according to any one of claims 20 to 26, wherein a serving cell of the second terminal supports the extended discontinuous reception mechanism.

28. The method according to claim 27, wherein that the serving cell of the second terminal supports the extended discontinuous reception mechanism comprises: when an RRC mode of the second terminal is an RRC idle mode and/or an RRC inactive mode, the serving cell supports the extended discontinuous reception mechanism.

29. A communication method, applied to a second terminal, wherein the second terminal provides a relay service for a first terminal, and the method comprises:
receiving first information, wherein the first information comprises at least one parameter, first cycle information is configured for the first terminal, the first cycle information indicates an extended discontinuous reception cycle of the first terminal, the at least one parameter is related to second information, and the second information comprises at least one of the following: partial information or all information in the first cycle information, and a paging time window of the first terminal; and
determining second cycle information based on the first information, and determining, based on the second cycle information, a cycle in which a network pages the first terminal.

30. The method according to claim 29, further comprising:
sending capability information of the second terminal and/or capability information of a serving cell of the second terminal to the first terminal, wherein the capability information of the second terminal indicates that the second terminal supports or does not support an extended discontinuous reception mechanism, and the capability information of the serving cell indicates that the serving cell supports or does not support the extended discontinuous reception mechanism.

31. The method according to claim 29, further comprising:
sending sixth indication information to the first terminal, wherein the sixth indication information indicates that the second terminal is capable of receiving, for the first terminal, a paging message sent by the network to the first terminal.

32. The method according to claim 31, wherein the sending the sixth indication information to the first terminal comprises:
when the capability information of the second terminal and the capability information of the serving cell of the second terminal meet a preset condition, sending the sixth indication information to the first terminal, wherein the preset condition comprises that the second terminal supports the extended discontinuous reception mechanism and the serving cell supports the extended discontinuous reception mechanism.

33. A communication method, applied to a second terminal, wherein the second terminal provides a relay service for a first terminal, the second terminal does not support an extended discontinuous reception mechanism, and the method comprises:
receiving first information, wherein the first information is determined based on extended discontinuous reception information of the first terminal, and the first information comprises at least one parameter; and
determining second cycle information based on the first information, and determining, based on the second cycle information, a cycle in which a network pages the first terminal.

34. A communication apparatus, comprising a module or a unit configured to perform the method according to any one of claims 1 to 19, or a module or a unit that enables the communication apparatus to perform the method according to any one of claims 20 to 28, or a module or a unit that enables the communication apparatus to perform the method according to any one of claims 29 to 32, or a module or a unit that enables the communication apparatus to perform the method according to claim 33.

35. A communication apparatus, comprising a processor, wherein the processor is coupled to a memory, the memory is configured to store a program or instructions, and when the program or the instructions are executed by the processor, the communication apparatus is enabled to perform the method according to any one of claims 1 to 19, or the communication apparatus is enabled to perform the method according to any one of claims 20 to 28, or the communication apparatus is enabled to perform the method according to any one of claims 29 to 32, or the communication apparatus is enabled to perform the method according to claim 33.

36. A computer-readable storage medium, wherein the storage medium stores a computer program or instructions, and when the computer program or the instructions are executed by a communication apparatus, the method according to any one of claims 1 to 19 is implemented, or the method according to any one of claims 20 to 28 is implemented, or the method according to any one of claims 29 to 32 is implemented, or the method according to claim 33 is implemented.

37. A computer program product, wherein the computer program product comprises a computer program or instructions, and when the computer program or the instructions are run by a communication apparatus, the method according to any one of claims 1 to 19 is performed, or the method according to any one of claims 20 to 28 is performed, or the method according to any one of claims 29 to 32 is performed, or the method according to claim 33 is performed.

38. A chip, wherein the chip comprises a processor, and the chip is configured to execute program instructions in a memory, to perform the method according to any one of claims 1 to 19, or enable the communication apparatus to perform the method according to any one of claims 20 to 28, or enable the communication apparatus to perform the method according to any one of claims 29 to 32, or enable the communication apparatus to perform the method according to claim 33.

39. A communication system, comprising a first terminal and a second terminal, wherein the first terminal is configured to perform the method according to any one of claims 1 to 19, and the second terminal is configured to perform the method according to any one of claims 29 to 32; or the first terminal is configured to perform the method according to any one of claims 20 to 28, and the second terminal is configured to perform the method according to claim 33.
